# EUROPEAN PATENT APPLICATION

(11) **EP 4 171 086 A1**
(43) Date of publication of application: **26.04.2023**
(21) Application number: 21838923.7
(22) Date of filing: 28.06.2021
(51) Int. Cl.: H04W 8/26

(54) **METHOD AND APPARATUS FOR SENDING DOMAIN NAME SYSTEM REQUEST**

(30) Priority: 06.07.2020 CN 202010642999
(71) Applicant: Huawei Technologies Co., Ltd., Longgang District, Shenzhen, Guangdong 518129 (CN)
(72) Inventor: YAO, Qi, Shenzhen, Guangdong 518129 (CN); ZONG, Zaifeng, Shenzhen, Guangdong 518129 (CN)
(74) Representative: Gill Jennings & Every LLP
(86) International application number: PCT/CN2021/102830
(87) International publication number: WO 2022/007657

(57) **Abstract**

This application relates to the field of communication technologies, and provides a method and an apparatus for sending a domain name system request, to improve domain name system DNS resolution efficiency. The method includes: A terminal apparatus determines an address of a first DNS server corresponding to a first application. The terminal apparatus determines a first address of the terminal apparatus based on the address of the first DNS server and an address of the terminal apparatus corresponding to the address of the first DNS server. Then, the terminal apparatus sends DNS request information. The DNS request information includes an identifier of the first application, the address of the first DNS server, and the first address of the terminal apparatus.

## Description

This application claims priority to Chinese Patent Application No. 202010642999.5, filed with the China National Intellectual Property Administration on July 6, 2020 and entitled "METHOD AND APPARATUS FOR SENDING DOMAIN NAME SYSTEM REQUEST", which is incorporated herein by reference in its entirety.

### TECHNICAL FIELD

This application relates to the field of communication technologies, and in particular, to a method and an apparatus for sending a domain name system request.

### BACKGROUND

A packet data unit (packet data unit, PDU) session (session) accesses a data network (data network, DN) through a packet data unit session anchor (packet data unit session anchor, PSA) network element, so that a terminal apparatus performs data transmission with an application server (application server, AS) in the DN. The PSA network element is further in a communication connection with a domain name system (domain name system, DNS) server. For the PSA network element, the application server, and the DNS server that are deployed in the same data network, the DNS server receives DNS request information from the PSA network element, resolves a domain name in the DNS request information to obtain an internet protocol (internet protocol, IP) address of the application server, and then provides the IP address to the terminal apparatus through the PSA network element, so that the terminal apparatus implements data transmission with the application server based on the IP address of the application server.

In a multi-homing (multi-homing, MH) scenario, there are a plurality of PSA network elements for one PDU session. User plane paths to different PSA network elements are branched on a branch point (branch point, BP) device. One PSA network element corresponds to one DNS server, and different PSA network elements correspond to different DNS servers. In the MH scenario, the terminal apparatus includes a plurality of addresses, and the plurality of addresses correspond to a plurality of PSA network elements. One address of the terminal apparatus corresponds to one PSA network element, and different addresses of the terminal apparatus correspond to different PSA network elements.

In the MH scenario, for a piece of DNS request information, a source (source) address in the DNS request information is one address of the terminal apparatus and corresponds to one PSA network element, and a destination (destination) address in the DNS request information is an address of one DNS server. If there is no correspondence between a PSA network element corresponding to a source address in a piece of DNS request information and a DNS server corresponding to a destination address, that is, the PSA network element corresponding to the source address cannot communicate with the DNS server corresponding to the destination address, a "DNS resolution failure" phenomenon occurs, resulting in low DNS resolution efficiency.

### SUMMARY

Embodiments of this application provide a method and an apparatus for sending a domain name system request, to improve DNS resolution efficiency.

To achieve the foregoing objective, the following technical solutions are used in embodiments of this application.

According to a first aspect, an embodiment of this application provides a method for sending a domain name system request. The method may be performed by a terminal apparatus or a chip used in the terminal apparatus. The following provides descriptions by using an example in which the method is performed by the terminal apparatus. The method includes: The terminal apparatus determines an address of a first domain name system DNS server corresponding to a first application. The terminal apparatus determines a first address of the terminal apparatus based on the address of the first DNS server and an address of the terminal apparatus corresponding to the address of the first DNS server. Then, the terminal apparatus sends DNS request information. The DNS request information includes an identifier of the first application, the address of the first DNS server, and the first address of the terminal apparatus.

There is a correspondence between the address of the first DNS server and the first address of the terminal apparatus, and the first address of the terminal apparatus corresponds to one PSA network element. Therefore, the first DNS server can communicate with the PSA network element corresponding to the first address of the terminal apparatus. The DNS request information sent by the terminal apparatus includes the address of the first DNS server and the first address of the terminal apparatus. Therefore, the DNS request information can be transmitted to the first DNS server through the PSA network element corresponding to the terminal apparatus, to improve a DNS resolution success rate, and reduce a "DNS resolution failure" phenomenon caused by a problem that "a DNS server cannot communicate with a PSA network element" in a conventional technology.

In a possible design, the method for sending a domain name system request in this embodiment of this application further includes: The terminal apparatus receives, from a session management function SMF network element, the address of the first DNS server and the address of the terminal apparatus corresponding to the address of the first DNS server. For example, "the address of the first DNS server and the address of the terminal apparatus corresponding to the address of the first DNS server" may be transmitted to the terminal apparatus via a path selection rule (routing rule). In other words, the SMF network element can provide the terminal apparatus with the information of "the address of the first DNS server and the address of the terminal apparatus corresponding to the address of the first DNS server".

In a possible design, that a terminal apparatus determines an address of a first DNS server corresponding to a first application includes: The terminal apparatus receives, from the SMF network element, the identifier of the first application and an address of a DNS server corresponding to the identifier of the first application. For example, "the identifier of the first application and the address of the DNS server corresponding to the identifier of the first application" may be transmitted to the terminal apparatus via the path selection rule (routing rule). Then, the terminal apparatus determines the address of the first DNS server based on the identifier of the first application and the address of the DNS server corresponding to the identifier of the first application.

In this way, when the SMF network element provides the terminal apparatus with "the identifier of the first application and the address of the DNS server corresponding to the identifier of the first application", the terminal apparatus can determine the address of the first DNS server based on the information provided by the SMF network element.

In a possible design, the identifier of the first application corresponds to a plurality of DNS servers. That the terminal apparatus determines the address of the first DNS server based on the identifier of the first application and the address of the DNS server corresponding to the identifier of the first application includes: The terminal apparatus determines, from the plurality of DNS servers, the first DNS server that meets a preset policy. The preset policy includes at least one of the following: a priority of the first DNS server meets a priority condition in priorities of the plurality of DNS servers; and a distance between the first DNS server and the terminal apparatus meets a spacing distance condition.

In this way, when the identifier of the first application corresponds to the plurality of DNS servers, the terminal apparatus can determine, according to the preconfigured preset policy from the plurality of DNS servers, one DNS server as the first DNS server, to determine the address of the first DNS server.

According to a second aspect, an embodiment of this application provides a method for sending a domain name system request. The method may be performed by a branch point BP device or a chip used in the BP device. The following provides descriptions by using an example in which the method is performed by the BP device. The method includes: The BP device receives domain name system DNS request information from a terminal apparatus. Then, the BP device updates at least one of a source address and a destination address in the DNS request information to obtain updated DNS request information. A source address in the updated DNS request information is a first address of the terminal apparatus, and a destination address in the updated DNS request information is an address of a first DNS server. The BP device sends the updated DNS request information to a first packet data unit session anchor PSA network element based on the source address in the updated DNS request information. The first PSA network element corresponds to the first address of the terminal apparatus, and the destination address in the updated DNS request information enables the first PSA network element to send the updated DNS request information to the first DNS server, so that the first DNS server resolves the updated DNS request information.

The source address in the updated DNS request information is the first address of the terminal apparatus, and the destination address in the updated DNS request information is the address of the first DNS server. Therefore, the first PSA network element corresponding to the first address of the terminal apparatus can communicate with the first DNS server, so that the updated DNS request information can be transmitted to the first DNS server through the first PSA network element, to improve a DNS resolution success rate, and reduce a "DNS resolution failure" phenomenon caused by a problem that "a DNS server cannot communicate with a PSA network element" in a conventional technology.

In a possible design, that the BP device updates at least one of a source address and a destination address in the DNS request information includes: The BP device updates at least one of the source address and the destination address in the DNS request information based on an identifier of a first application in the DNS request information; the BP device updates the destination address in the DNS request information based on the source address in the DNS request information; or the BP device updates the source address in the DNS request information based on the destination address in the DNS request information.

In other words, in a process in which the BP device updates the DNS request information, the BP device may update at least one of the source address and the destination address in the DNS request information based on the identifier of the first application in the DNS request information, the source address in the DNS request information, or the destination address in the DNS request information, to obtain the updated DNS request information.

In a possible design, that the BP device updates at least one of the source address and the destination address in the DNS request information based on an identifier of a first application in the DNS request information includes: The BP device determines the address of the first DNS server corresponding to the identifier of the first application. Then, the BP device updates the destination address in the DNS request information to the address of the first DNS server. The BP device determines the first address of the terminal apparatus based on the address of the first DNS server and an address of the terminal apparatus corresponding to the address of the first DNS server. Then, the BP device updates the source address in the DNS request information to the first address of the terminal apparatus.

In this way, the BP device can update the source address and the destination address in the DNS request information based on the identifier of the first application, to obtain the updated DNS request information.

In a possible design, that the BP device determines the address of the first DNS server corresponding to the identifier of the first application includes: The BP device receives, from a session management function SMF network element, the identifier of the first application and an address of a DNS server corresponding to the identifier of the first application; and then the BP device determines the address of the first DNS server based on the identifier of the first application and the address of the DNS server corresponding to the identifier of the first application.

In this way, when the SMF network element provides the BP device with "the identifier of the first application and the address of the DNS server corresponding to the identifier of the first application", the BP device can determine the address of the first DNS server based on the information provided by the SMF network element.

In a possible design, that the BP device updates the source address in the DNS request information based on the destination address in the DNS request information includes: If the destination address in the DNS request information is the address of the first DNS server, the BP device determines the first address of the terminal apparatus based on the address of the first DNS server and an address of the terminal apparatus corresponding to the address of the first DNS server. Then, the BP device updates the source address in the DNS request information to the first address of the terminal apparatus.

In other words, after receiving the DNS request information, the BP device replaces the source address in the DNS request information based on the destination address in the DNS request information, to ensure that the PSA network element corresponding to the source address in the updated DNS request information can communicate with the first DNS server.

In a possible design, the method for sending a domain name system request in this embodiment of this application further includes: The BP device receives, from an SMF network element, the address of the first DNS server and the address of the terminal apparatus corresponding to the address of the first DNS server.

In other words, the SMF network element can provide the BP device with the information of "the address of the first DNS server and the address of the terminal apparatus corresponding to the address of the first DNS server".

In a possible design, that the BP device updates the destination address in the DNS request information based on the source address in the DNS request information includes: If the source address in the DNS request information is the first address of the terminal apparatus, the BP device determines the address of the first DNS server based on the first address of the terminal apparatus and an address of a DNS server corresponding to the first address of the terminal apparatus. Then, the BP device updates the destination address in the DNS request information to the address of the first DNS server.

In other words, after receiving the DNS request information, the BP device replaces the destination address in the DNS request information based on the source address in the DNS request information, to ensure that the PSA network element corresponding to the source address in the updated DNS request information can communicate with the first DNS server.

In a possible design, the method for sending a domain name system request in this embodiment of this application further includes: The BP device receives, from an SMF network element, the first address of the terminal apparatus and the address of the DNS server corresponding to the first address of the terminal apparatus.

In other words, the SMF network element may provide the BP device with the information of "the first address of the terminal apparatus and the address of the DNS server corresponding to the first address of the terminal apparatus".

In a possible design, the method for sending a domain name system request in this embodiment of this application further includes: The BP device receives, from the first PSA network element, response information in response to the DNS request information. Then, the BP device updates at least one of a source address and a destination address in the response information, to obtain updated response information. A source address in the updated response information is the destination address in the to-be-updated DNS request information, and a destination address in the updated response information is the source address in the to-be-updated DNS request information. Then, the BP device sends the updated response information to the terminal apparatus. The DNS request information includes the identifier of the first application, and the response information includes an internet protocol IP address of an application server corresponding to the first application.

Herein, the updated response information includes the IP address of the application server corresponding to the first application, the destination address in the to-be-updated DNS request information, and the source address in the to-be-updated DNS request information. After sending the DNS request information, the terminal apparatus needs to monitor the response message that carries the source address and the destination address in the to-be-updated DNS request information. Therefore, the BP device can replace at least one of the source address and the destination address in the response information, to ensure that the terminal apparatus can obtain, through the monitoring, the response message that carries the source address and the destination address in the to-be-updated DNS request information.

According to a third aspect, an embodiment of this application provides a method for sending a domain name system request. The method may be performed by a branch point BP device or a chip used in the BP device. The following provides descriptions by using an example in which the method is performed by the BP device. The method includes: The BP device receives domain name system DNS request information from a terminal apparatus, and then sends, based on a destination address in the DNS request information, the DNS request information to a first packet data unit session anchor PSA network element corresponding to the destination address. The DNS request information enables the first PSA network element to send the DNS request information to a first DNS server, so that first DNS server resolves the DNS request information.

Herein, the destination address in the DNS request information corresponds to the first PSA network element, and the destination address in the DNS request information is an address of the first DNS server. Therefore, the first DNS server can communicate with the first PSA network element, to reduce a "DNS resolution failure" phenomenon caused by a problem that "a DNS server cannot communicate with a PSA network element" in a conventional technology, and improve a DNS resolution success rate.

According to a fourth aspect, an embodiment of this application provides a method for sending a domain name system request. The method may be performed by a first PSA network element or a chip used in the first PSA network element. The following provides descriptions by using an example in which the method is performed by the first PSA network element. The method includes: The first PSA network element sends DNS request information to a first domain name system DNS server. The DNS request information includes an address of the first DNS server and a second address of a terminal apparatus corresponding to a second PSA network element. Then, the first PSA network element receives, from the first DNS server, response information in response to the DNS request information. Then, the first PSA network element sends the response information to a branch point BP device based on forwarding rule information. The forwarding rule information indicates the first PSA network element to send a data packet whose destination address is the second address to the BP device, and the data packet includes the response information.

Herein, the response information is the response information in response to the DNS request information. In other words, in a process in which the first DNS server feeds back the response information, after the first PSA network element receives the response information from the first DNS server, even if a destination address in the response information is the second address of the terminal apparatus and corresponds to the second PSA network element, the first PSA network element can still send the response information to the BP device based on the forwarding rule information, so that the response information can be provided to the terminal apparatus through the BP device.

In a possible design, the method for sending a domain name system request in this embodiment of this application further includes: The first PSA network element receives the forwarding rule information from a session management function SMF network element. In other words, the SMF network element provides the first PSA network element with the forwarding rule information, so that the first PSA network element forwards the response information based on the forwarding rule information.

In a possible design, that the first PSA network element receives, from the first DNS server, response information in response to the DNS request information includes: The first PSA network element receives, from the first DNS server through a tunnel between the first PSA network element and the first DNS server, the response information in response to the DNS request information. The DNS request information includes an identifier of a first application, and the response information includes an internet protocol IP address of an application server corresponding to the first application.

In other words, the tunnel between the first PSA network element and the first DNS server can block the destination address in the response information, so that the response information can be transmitted from the first DNS server to the first PSA network element.

According to a fifth aspect, an embodiment of this application provides an apparatus for sending a domain name system request. The apparatus for sending a domain name system request includes a unit configured to perform the steps according to any one of the foregoing aspects. The apparatus for sending a domain name system request may be the terminal apparatus according to any one of the first aspect or the possible designs of the first aspect, or a chip that implements a function of the terminal apparatus. The apparatus for sending a domain name system request includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a sixth aspect, an embodiment of this application provides an apparatus for sending a domain name system request. The apparatus includes a processor and an interface circuit. The processor is configured to: communicate with another apparatus through the interface circuit, and perform the method for sending a domain name system request according to any one of the foregoing aspects. There are one or more processors. The apparatus for sending a domain name system request may be the terminal apparatus according to any one of the first aspect or the possible designs of the first aspect, or a chip that implements a function of the terminal apparatus.

According to a seventh aspect, an embodiment of this application provides an apparatus for sending a domain name system request. The apparatus includes a processor and a memory. The memory is configured to store computer instructions. When the processor executes the instructions, the apparatus for sending a domain name system request is enabled to perform the method according to any one of the foregoing aspects. The apparatus for sending a domain name system request may be the terminal apparatus according to any one of the first aspect or the possible designs of the first aspect, or a chip that implements a function of the terminal apparatus.

According to an eighth aspect, an embodiment of this application provides an apparatus for sending a domain name system request. The apparatus includes a processor. The processor is configured to: after being coupled to a memory and reading instructions in the memory, perform the method according to any one of the foregoing aspects according to the instructions. The apparatus for sending a domain name system request may be the terminal apparatus according to any one of the first aspect or the possible designs of the first aspect, or a chip that implements a function of the terminal apparatus.

According to a ninth aspect, an embodiment of this application provides an apparatus for sending a domain name system request. The apparatus for sending a domain name system request includes a unit configured to perform the steps according to any one of the foregoing aspects. The apparatus for sending a domain name system request may be the BP device according to any one of the second aspect or the possible designs of the second aspect, or a chip that implements a function of the BP device. Alternatively, the apparatus for sending a domain name system request may be the BP device according to any one of the third aspect or the possible designs of the third aspect, or a chip that implements a function of the BP device. The apparatus for sending a domain name system request includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a tenth aspect, an embodiment of this application provides an apparatus for sending a domain name system request. The apparatus includes a processor and an interface circuit. The processor is configured to: communicate with another apparatus through the interface circuit, and perform the method for sending a domain name system request according to any one of the foregoing aspects. There are one or more processors. The apparatus for sending a domain name system request may be the BP device according to any one of the second aspect or the possible designs of the second aspect, or a chip that implements a function of the BP device. Alternatively, the apparatus for sending a domain name system request may be the BP device according to any one of the third aspect or the possible designs of the third aspect, or a chip that implements a function of the BP device.

According to an eleventh aspect, an embodiment of this application provides an apparatus for sending a domain name system request. The apparatus includes a processor and a memory. The memory is configured to store computer instructions. When the processor executes the instructions, the apparatus for sending a domain name system request is enabled to perform the method according to any one of the foregoing aspects. The apparatus for sending a domain name system request may be the BP device according to any one of the second aspect or the possible designs of the second aspect, or a chip that implements a function of the BP device. Alternatively, the apparatus for sending a domain name system request may be the BP device according to any one of the third aspect or the possible designs of the third aspect, or a chip that implements a function of the BP device.

According to a twelfth aspect, an embodiment of this application provides an apparatus for sending a domain name system request. The apparatus includes a processor. The processor is configured to: after being coupled to a memory and reading instructions in the memory, perform the method according to any one of the foregoing aspects according to the instructions. The apparatus for sending a domain name system request may be the BP device according to any one of the second aspect or the possible designs of the second aspect, or a chip that implements a function of the BP device. Alternatively, the apparatus for sending a domain name system request may be the BP device according to any one of the third aspect or the possible designs of the third aspect, or a chip that implements a function of the BP device.

According to a thirteenth aspect, an embodiment of this application provides an apparatus for sending a domain name system request. The apparatus for sending a domain name system request includes a unit configured to perform the steps according to any one of the foregoing aspects. The apparatus for sending a domain name system request may be the first PSA network element according to any one of the fourth aspect or the possible designs of the fourth aspect, or a chip that implements a function of the first PSA network element. The apparatus for sending a domain name system request includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a fourteenth aspect, an embodiment of this application provides an apparatus for sending a domain name system request. The apparatus includes a processor and an interface circuit. The processor is configured to: communicate with another apparatus through the interface circuit, and perform the method for sending a domain name system request according to any one of the foregoing aspects. There are one or more processors. The apparatus for sending a domain name system request may be the first PSA network element according to any one of the fourth aspect or the possible designs of the fourth aspect, or a chip that implements a function of the first PSA network element.

According to a fifteenth aspect, an embodiment of this application provides an apparatus for sending a domain name system request. The apparatus includes a processor and a memory. The memory is configured to store computer instructions. When the processor executes the instructions, the apparatus for sending a domain name system request is enabled to perform the method according to any one of the foregoing aspects. The apparatus for sending a domain name system request may be the first PSA network element according to any one of the fourth aspect or the possible designs of the fourth aspect, or a chip that implements a function of the first PSA network element.

According to a sixteenth aspect, an embodiment of this application provides an apparatus for sending a domain name system request. The apparatus includes a processor. The processor is configured to: after being coupled to a memory and reading instructions in the memory, perform the method according to any one of the foregoing aspects according to the instructions. The apparatus for sending a domain name system request may be the first PSA network element according to any one of the fourth aspect or the possible designs of the fourth aspect, or a chip that implements a function of the first PSA network element.

According to a seventeenth aspect, an embodiment of this application provides a computer-readable storage medium. The computer-readable storage medium stores instructions. When the instructions are run on a computer, the computer is enabled to perform the method for sending a domain name system request according to any one of the foregoing aspects.

According to an eighteenth aspect, an embodiment of this application provides a computer program product including instructions. When the computer program product runs on a computer, the computer is enabled to perform the method for sending a domain name system request according to any one of the foregoing aspects.

According to a nineteenth aspect, an embodiment of this application provides a circuit system. The circuit system includes a processing circuit. The processing circuit is configured to perform the method for sending a domain name system request according to any one of the foregoing aspects.

According to a twentieth aspect, an embodiment of this application provides a chip. The chip includes a processor, the processor is coupled to a memory, and the memory stores program instructions. When the program instructions stored in the memory are executed by the processor, the method for sending a domain name system request according to any one of the foregoing aspects is implemented.

According to a twenty-first aspect, an embodiment of this application provides a system for sending a domain name system request. The system for sending a domain name system request includes the terminal apparatus according to any one of the designs of the first aspect, the BP device according to any one of the designs of the second aspect, or the BP device according to any one of the designs of the third aspect and the first PSA network element according to any one of the designs of the fourth aspect.

For technical effects brought by any design of the fifth aspect to the twenty-first aspect, refer to beneficial effects in the corresponding methods provided above. Details are not described herein again.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a schematic flowchart of a method for sending a domain name system request according to an embodiment of this application;
FIG. 4 is a schematic flowchart of another method for sending a domain name system request according to an embodiment of this application;
FIG. 5A and FIG. 5B are a schematic flowchart of still another method for sending a domain name system request according to an embodiment of this application;
FIG. 6 is a schematic flowchart of yet another method for sending a domain name system request according to an embodiment of this application;
FIG. 7 is a schematic flowchart of still yet another method for sending a domain name system request according to an embodiment of this application;
FIG. 8 is a schematic flowchart of a further method for sending a domain name system request according to an embodiment of this application;
FIG. 9 is a schematic diagram of a structure of an apparatus for sending a domain name system request according to an embodiment of this application; and
FIG. 10 is a schematic diagram of a structure of another apparatus for sending a domain name system request according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. In embodiments of this application, "a plurality of" includes two or more. In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example", or "for example" is intended to present a related concept in a specific manner.

Technical terms used in embodiments of this application are first described.

### 1. Domain name resolution

A DNS is a distributed database that is on the internet and in which a domain name (domain name) and an internet protocol (internet protocol, IP) address are mapped to each other. In the DNS, a domain name can be mapped to an IP address of an application server. Herein, a process of mapping the domain name to the IP address of the application server is referred to as "domain name resolution".

The domain name, also referred to as a network domain, is a name that is of a computer or a computer group on the internet and that is formed by a string of characters separated by dots, and is for identifying an electronic bearing or a geographical location of the computer during data transmission. For example, the domain name may be www. 123456.com.cn.

A domain name resolution device in the DNS is a DNS server. Herein, the DNS server can resolve, through a domain name resolution mechanism, a domain name requested by a terminal apparatus, to obtain an IP address of an application server corresponding to the domain name. Optionally, there may be a plurality of DNS servers distributed in a hierarchical architecture. Based on the domain name resolution mechanism, in the DNS, the DNS servers having ascending order successively resolves the domain name until the IP address of the application server corresponding to the domain name is obtained. Details of the domain name resolution mechanism are not described in embodiments of this application again.

For example, a process in which the terminal apparatus accesses a target domain name is as follows: After obtaining the target domain name, the terminal apparatus sends, to the DNS server, DNS request information that carries the target domain name. Accordingly, the DNS server receives the DNS request information from the terminal apparatus. Then, the DNS server obtains, through resolution, an IP address of a target application server corresponding to the target domain name, includes the IP address of the target application server in response information, and sends the response information to the terminal apparatus. Accordingly, the terminal apparatus receives the response information from the DNS server, so that the terminal apparatus obtains the IP address of the target application server, and implements data transmission with the target application server based on the IP address. Herein, the "DNS request information" may also be described as a "request message" or a "domain name resolution request message". The "response message" may also be described as a "response message", a "DNS response (response)", or a "domain name resolution response message", which corresponds to the DNS request information.

### 2. PDU session

The PDU session is a connection between a terminal apparatus and a data network, and is for data transmission between the terminal apparatus and the data network. The terminal apparatus may be connected to a same data network or different data networks through a plurality of PDU sessions.

### 3. MH mechanism

A terminal apparatus may be connected to a same data network through one or more PDU sessions that are served by different PSA network elements. Herein, the PSA network element may be a user plane function (user plane function, UPF) network element connected to a data network. The PSA may alternatively be denoted as a PDU session anchor UPF. In embodiments of this application, an example in which "the UPF is used as the PSA" is used for description. In the MH mechanism, one PDU session accesses the data network through a plurality of PSA network elements. User plane paths to different PSA network elements are branched on a BP device. Herein, the BP device may alternatively be a UPF network element.

In the MH mechanism, the terminal apparatus includes a plurality of addresses, and the plurality of addresses correspond to a plurality of PSA network elements. One address of the terminal apparatus corresponds to one PSA network element, and different addresses of the terminal apparatus correspond to different PSA network elements.

In a process in which the terminal apparatus accesses a target domain name, the terminal apparatus sends DNS request information to the BP device. Accordingly, the BP device receives the DNS request information from the terminal apparatus. In addition to the target domain name, the DNS request information further includes a source address and a destination address. The source address in the DNS request information is one address of the terminal apparatus, and corresponds to one PSA network element. The destination address in the DNS request information is an address of one DNS server. If there is no correspondence between a PSA network element corresponding to a source address in a piece of DNS request information and a DNS server corresponding to a destination address, that is, the PSA network element corresponding to the source address cannot communicate with the DNS server corresponding to the destination address, a "DNS resolution failure" phenomenon occurs, resulting in low DNS resolution efficiency.

In view of this, embodiments of this application provide a method for sending a domain name system request. A system to which the method for sending a domain name system request in embodiments of this application is applicable is first described. The system may be a communication system that supports a fifth generation (fifth generation, 5G) mobile communication technology, for example, an NR access technology. Alternatively, the system may be a communication system that supports a plurality of radio technologies, for example, a communication system that supports an LTE technology and a new radio (new radio, NR) access technology. In addition, the system may also be applicable to a future-oriented communication technology.

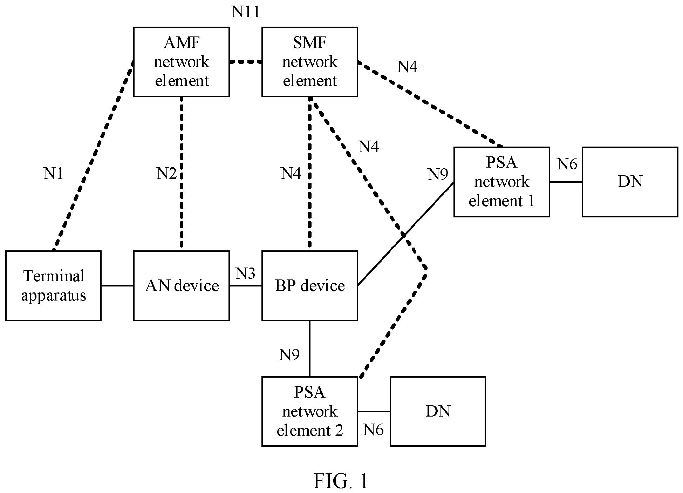

Refer to FIG. 1. A network architecture of the system is described by using the communication system that supports the 5G mobile communication technology as an example. Network elements in the 5G network architecture include a terminal apparatus, an access network (access network, AN) device, an access and mobility management function (authentication management function, AMF) network element, a session management function (session management function, SMF) network element, a PSA network element, a BP device, a data network (data network, DN), and the like. FIG. 1 shows only two PSA network elements. FIG. 1 is merely a schematic diagram, and does not constitute a limitation on an applicable scenario of the method for sending a domain name system request in embodiments of this application.

The terminal apparatus is also referred to as user equipment (user equipment, UE), a terminal device, a mobile station (mobile station, MS), a mobile terminal (mobile terminal, MT), or the like, and is a device that provides voice/data connectivity for a user, for example, a handheld device or a vehicle-mounted device having a wireless connection function. The terminal apparatus may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal apparatus in a future 5G communication network or a communication network after 5G, or the like. This is not limited in embodiments of this application.

The access network device may also be a radio access network (radio access network, RAN) device, and is an apparatus that is deployed in a radio access network and that is configured to provide a wireless communication function. Optionally, the RAN device in embodiments of this application includes but is not limited to a macro base station and a micro base station (also referred to as a small cell) in various forms, for example, a relay station, a transmission reception point (transmission reception point, TRP), a next-generation network node (gNodeB, gNB), and an evolved NodeB connected to a next-generation core network (ng evolved NodeB, ng-eNB), and may further include a RAN device of a non-3rd generation partnership project (3rd generation partnership project, 3GPP) system such as a wireless local area network (wireless local area network, WLAN) access device.

The AMF network element has functions such as mobility management, registration management, connection management, lawful interception, access authentication, and access authorization of the terminal apparatus, and supports transmission of session management (session management, SM) information between the terminal apparatus and the SMF.

The SMF network element has functions such as session management and roaming. The session management function includes, for example, session establishment, modification, and release. The roaming function may include charging data collection and supporting of signaling transmission for authentication/authorization with an external (external) data network.

The PSA network element is a user plane function network element, and is mainly responsible for connecting to an external network and processing, such as forwarding, charging, and lawful interception, of a user packet. Optionally, the PSA network element may further receive data. FIG. 1 shows only two PSA network elements, which are respectively denoted as a PSA network element 1 and a PSA network element 2.

The BP device can receive an uplink data packet from the terminal apparatus, and distribute, based on a source address of the uplink data packet, the uplink data packet to a PSA network element corresponding to the source address. The BP device can further receive downlink data packets from the PSA network element, aggregate the downlink data packets received from the PSA network element, and send the downlink data packets to the terminal apparatus. Herein, the BP device may alternatively be implemented as a UPF network element.

The data network is a network that provides a service for the terminal apparatus. For example, some data networks provide a network access function for the terminal apparatus, and other data networks provide a short message service function for the terminal apparatus.

The terminal apparatus communicates with the AMF network element through an N1 interface, the AN device communicates with the AMF network element through an N2 interface, the AN device communicates with the BP device through an N3 interface, the BP device communicates with the SMF network element through an N4 interface, the BP device communicates with the UPF network element through an N9 interface, the UPF network element communicates with the SMF network element through an N4 interface, the UPF network element accesses the data network element through an N6 interface, and the AMF network element communicates with the SMF network element through an N11 interface. In FIG. 1, a dashed line shows a path on which control plane signaling can be exchanged, and a solid line shows a path on which user plane data can be exchanged.

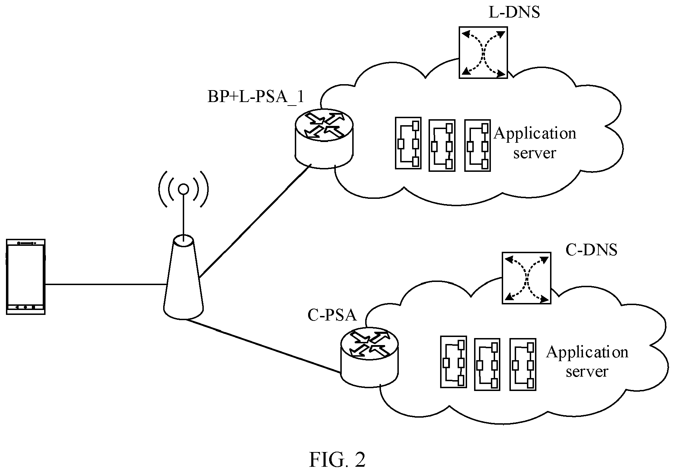

It should be noted that data networks connected to different PSA network elements are located in different data centers (data centers, DCs). A scenario shown in FIG. 1 is still used as an example to describe distribution of the data networks. Refer to FIG. 2. A data network connected to the PSA network element 1 may be a central data network (central data network) or a data network in a central data center (central data center). In this case, the PSA network element 1 may be denoted as a central PSA, which is referred to as a C-PSA for short. The data network connected to the PSA network element 1 may alternatively be a remote data network (remote data network) or a data network in a remote data center (remote data center). In this case, the PSA network element 1 may be denoted as a remote PSA, which is referred to as an R-PSA for short. The PSA network element 1 can further communicate with a DNS server in the data network. A data network connected to the PSA network element 2 is located in a local DC or an edge data network (edge data network, EDN). In this case, the PSA network element 2 may be denoted as a local PSA, which is referred to as an L-PSA for short. Different L-PSA network elements may be identified by different number suffixes. For example, a first L-PSA network element may be denoted as an L-PSA_1, and a second L-PSA network element may be denoted as an L-PSA_2. The PSA network element 2 can further communicate with a DNS server in the local DC. There may be no IP connectivity between a PSA network element and a DNS server that are in different DCs, and the PSA network element and the DNS server cannot communicate with each other. For example, the PSA network element 1 cannot communicate with the DNS server in the local DC. The PSA network element 2 cannot communicate with the DNS server in the central DC. If there is the PSA network element 2 at a location of the terminal apparatus, when the terminal apparatus accesses the DN in the local DC, the SMF network element inserts the PSA network element 2 into a session path as the local PSA, so that the terminal apparatus can access a nearby application in the local DN. The BP device and the L-PSA network element may be separately deployed or may be deployed in an integrated manner. In a scenario shown in FIG. 2, a function of the BP device and a function of the PSA network element 2 are implemented by a same network element, and the network element may be the PSA network element 2.

Herein, the local DC or the edge data network may be implemented as a mobile edge computing (mobile/multi-access edge computing, MEC) node. Usually, the MEC node includes an MEC platform and a data plane function network element. Various application servers, DNS servers, and the like may be deployed in the MEC platform. This is not specifically limited in embodiments of this application. The MEC platform in embodiments of this application may also be referred to as a MEC system or another name. This is not specifically limited in embodiments of this application. The data plane function network element may be implemented as the PSA network element. The application server is a carrier that can provide a corresponding service. For example, a WeChat application server may be a carrier that can provide a WeChat service. The carrier may be a virtual device such as a virtual machine or a container, or may be a physical device. This is not specifically limited in embodiments of this application.

The system and application scenarios described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

The following specifically describes the method for sending a domain name system request provided in embodiments of this application.

It should be noted that in the following embodiments of this application, names of messages between network elements, names of parameters in messages, or the like are merely examples, and there may be other names during specific implementation. This is uniformly described herein, and details are not described below again.

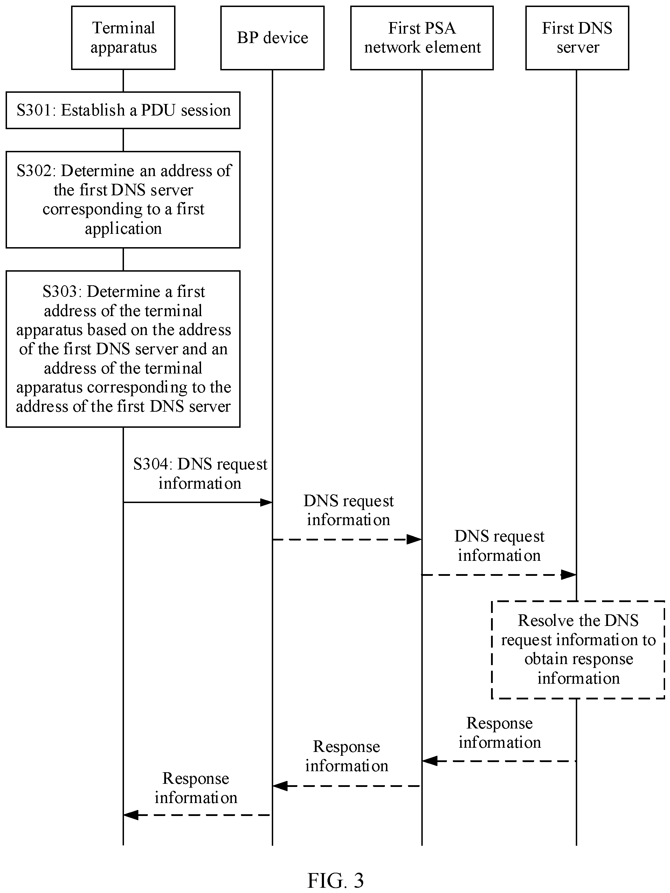

An embodiment of this application provides a first method for sending a domain name system request. The method for sending a domain name system request is applied to a domain name resolution process. Refer to FIG. 3. The method for sending a domain name system request in this embodiment of this application includes the following steps.

S301: A terminal apparatus establishes a PDU session.

For example, the terminal apparatus initiates a session establishment request message, to establish the PDU session. A PDU session establishment procedure is jointly completed by a network device (for example, an SMF network element and a UPF network element) and the terminal apparatus. For a detailed implementation process of the session establishment procedure, refer to a conventional technology. Details are not described herein again.

A user plane path of the PDU session includes a path between a RAN device and a BP device and a path between the BP device and a PSA network element. Herein, there are two or more PSA network elements. The PSA network element may be a PSA network element in a local DC or a PSA network element in a central DC. Correspondingly, a plurality of addresses are allocated to the terminal apparatus. In an actual application process, the address allocated to the terminal apparatus may be a specific address, for example, an internet protocol version 4 (internet protocol version 4, IPv4) address, or may be an address prefix (prefix), for example, an internet protocol version 6 (internet protocol version 6, IPv6) address prefix. One address of the terminal apparatus corresponds to one PSA network element, and different addresses of the terminal apparatus correspond to different PSA network elements. The plurality of addresses of the terminal apparatus may be allocated by the SMF network element or the PSA network element. In a case in which the PSA network element allocates the addresses to the terminal apparatus, one PSA network element allocates one address to the terminal apparatus, and different PSA network elements allocate different addresses to the terminal apparatus. For example, table 1 shows a correspondence between an address of a terminal apparatus and a PSA network element.

**Table 1**

| Address of a terminal apparatus | PSA network element |
|---|---|
| Address@0 of the terminal apparatus | C-PSA |
| Address@1 of the terminal apparatus | L-PSA_1 |
| ··· | |
| Address@n of the terminal apparatus | L-PSA_n |

Table 1 shows (n+1) addresses of the terminal apparatus, which are respectively denoted as: the address@0 of the terminal apparatus, the address@1 of the terminal apparatus, ..., and the address@n of the terminal apparatus. There are (n+1) PSA network elements, which are respectively denoted as the C-PSA, the L-PSA_1, ..., and the L-PSA_n. In table 1, there is a correspondence between an address of a terminal apparatus and a PSA network element in a same row. As shown in table 1, the "address@0 of the terminal apparatus" corresponds to the "C-PSA" network element, the "address@1 of the terminal apparatus" corresponds to the "L-PSA_1" network element, ..., and the "address@n of the terminal apparatus" corresponds to the "L-PSA_n" network element.

In addition, the PSA network element can serve or access a specific data network/data center. A DNS server may be deployed in these data networks/data centers, to perform DNS resolution through the DNS server. Alternatively, a DNS server may be deployed on the PSA network element. Alternatively, a DNS server may be deployed on a path between the PSA network element and the "data network/data center". A deployment location of the DNS server is not limited in this embodiment of this application, to ensure that after receiving DNS request information, the PSA network element can send the DNS request information to a corresponding DNS server. In this way, there is a correspondence between a DNS server and a "data network/data center", and there is also a correspondence between a PSA and a "data network/data center". In other words, a PSA network element and a DNS server that correspond to a same "data network/data center" can communicate with each other, that is, there is a correspondence between a PSA network element and a DNS server. For example, table 2 shows the correspondence between a PSA network element and a DNS server by using an "address of a DNS server" as an example. Herein, the address of the DNS server may be identified by an IP address, a domain name, or the like. Herein, at least two DNS servers have different addresses. In other words, addresses of DNS servers are not completely the same. The addresses of different DNS servers may be the same or different.

**Table 2**

| Address of a DNS server | PSA network element |
|---|---|
| IP@0 | C-PSA |
| IP@1 | L-PSA_1 |
| ··· | |
| IP@n | L-PSA_n |

Table 2 shows addresses of (n+1) DNS servers, which are respectively denoted as the IP@0, the IP@1, ..., and the IP@n. The addresses "IP@0, IP@1, ..., and IP@n" may be partially the same. There are (n+1) PSA network elements, which are respectively denoted as the C-PSA, the L-PSA_1, ..., and the L-PSA_n. In table 2, there is a correspondence between a DNS server and a PSA network element in a same row. As shown in table 2, for example, the "IP@0" corresponds to the "C-PSA" network element, the "IP@1" corresponds to the "L-PSA_1" network element, ..., and the "IP@n" corresponds to the "L-PSA_n" network element.

It should be noted that table 1 shows the "correspondence between an address of a terminal apparatus and a PSA network element" only in a form of a "table". Table 2 shows the "correspondence between a PSA network element and a DNS server" only in a form of a "table". Table 1 and table 2 may be combined in a same table, to present the "correspondence between an address of a terminal apparatus and a PSA network element" and the "correspondence between a PSA network element and a DNS server". This is not limited in this embodiment of this application.

S302: The terminal apparatus determines an address of a first DNS server corresponding to a first application.

The first application may be a software product that is installed on the terminal apparatus and that is for accessing a service provided by an application server. These software products may also be referred to as application clients.

The "first DNS server corresponding to the first application" means that an application server corresponding to the first application is deployed in a data network corresponding to the first DNS server. The address of the first DNS server may be identified by an IP address, a domain name, or the like.

For example, the first application may be a WeChat client on the terminal apparatus. Correspondingly, the application server is a WeChat application server, and provides a service for the WeChat client on the terminal apparatus. The first DNS server is a DNS server that can resolve the DNS request information including an application WeChat. The scenario shown in FIG. 2 is used as an example. If the application "WeChat" is deployed on an application server in the central DC, but the application "WeChat" is not deployed on an application server in the local DC, the first DNS server may be a DNS server in the central DC, and may be denoted as a "C-DNS" server. On the contrary, if the application "WeChat" is not deployed on an application server in the central DC, but the application "WeChat" is deployed on an application server in the local DC, the first DNS server is a DNS server in the central DC, and may be denoted as an "L-DNS" server.

It should be noted that different applications may be deployed in different data networks, and a DNS server corresponding to a data network is generally responsible for resolution of an application server in the same data network. Therefore, there is a correspondence between different applications and different DNS servers. For example, table 3-1 shows the "correspondence between different applications and different DNS servers" by using an "identifier of an application" and an "address of a DNS server" as an example. Herein, the identifier of the application may be a fully qualified domain name (fully qualified domain name, FQDN). There is a one-to-one correspondence between a data network and an address of a DNS server. Therefore, the "correspondence between different applications and different DNS servers" can also indicate specific applications deployed in data networks corresponding to DNS servers.

**Table 3-1**

| Identifier of an application | Address of a DNS server |
|---|---|
| FQDN_1 | IP@1 |
| FQDN_1 | IP@2 |
| FQDN_2 | IP@1 |
| FQDN_3 | IP@3 |
| ... | ... |
| FQDN_n | IP@2 |

Table 3-1 shows identifiers of n applications, which are respectively denoted as the FQDN_1, the FQDN_2, ..., and the FQDN_n. There are at least two DNS servers. Table 3-1 shows addresses of three DNS servers, which are respectively denoted as the IP@1, the IP@2, and the IP@3. In table 3-1, there is a correspondence between an application and a DNS server in a same row. As shown in table 3-1, an application identified by the "FQDN_1" corresponds to a DNS server whose address is the "IP@1", the application identified by the "FQDN_1" corresponds to a DNS server whose address is the "IP@2", an application identified by the "FQDN_2" corresponds to the DNS server whose address is the "IP@1", an application identified by the "FQDN 3" corresponds to a DNS server whose address is the "IP@3", and an application identified by the "FQDN_n" corresponds to the DNS server whose address is the "IP@2". The terminal apparatus may preconfigure the information of the "correspondence between an application and a DNS server", or the SMF network element, a PCF network element, or another network element may send the information of the "correspondence between an application and a DNS server" to the terminal apparatus. For example, in a process in which the SMF network element or the PCF network element inserts the BP device into the user plane path of the PDU session, the information of the "correspondence between an application and a DNS server" is carried in a user route selection policy (user route selection policy, URSP) sent to the terminal apparatus.

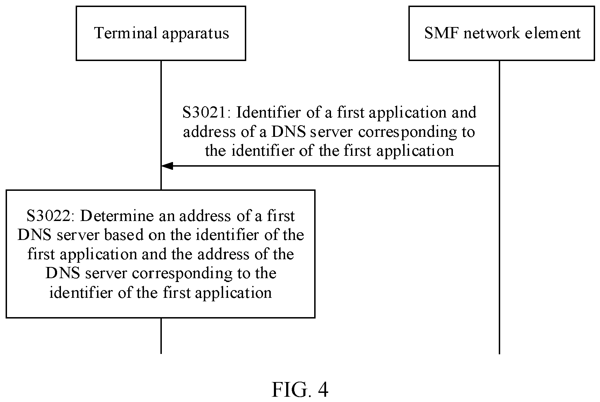

Herein, there are a plurality of manners in which "the terminal apparatus determines the address of the first DNS server corresponding to the first application", and the manners may be, for example, but are not limited to, a processing process shown in FIG. 4.

S3021: The SMF network element sends, to the terminal apparatus, an identifier of the first application and an address of a DNS server corresponding to the identifier of the first application. Accordingly, the terminal apparatus receives, from the SMF network element, the identifier of the first application and the address of the DNS server corresponding to the identifier of the first application.

For example, "the identifier of the first application and the address of the DNS server corresponding to the identifier of the first application" may be presented in a form of a table, or may be presented in another form. This is not limited in this embodiment of this application. Table 3-1 is used as an example. The first application may be one of the n applications in table 3-1.

S3022: The terminal apparatus determines the address of the first DNS server based on the identifier of the first application and the address of the DNS server corresponding to the identifier of the first application.

Herein, if the identifier of the first application corresponds to an address of one DNS server, the address of the DNS server is the address of the first DNS server. The "correspondence between different applications and different DNS servers" shown in table 3-1 is still used as an example, and the identifier of the first application is the "FQDN 3". In table 3-1, the application identified by the "FQDN 3" corresponds to only the DNS server whose address is the "IP@3". In other words, only the DNS server whose address is the "IP@3" can communicate with an application server on which the "first application" is deployed. In this way, the address of the first DNS server is the "IP@3".

If the identifier of the first application corresponds to addresses of two or more DNS servers, the terminal apparatus determines, according to a specific preset policy from a plurality of DNS servers, one DNS server as the first DNS server. For example, the terminal apparatus determines, from the plurality of DNS servers, the first DNS server that meets the preset policy. The preset policy includes at least one of the following:

First, a priority of the first DNS server meets a priority condition in priorities of the plurality of DNS servers. For example, the priority of the first DNS server is the highest in the priorities of the plurality of DNS servers.

Second, a distance between the first DNS server and the terminal apparatus meets a spacing distance condition. For example, the distance between the first DNS server and the terminal apparatus is less than or equal to a distance threshold, or the distance between the first DNS server and the terminal apparatus is the shortest in distances between the plurality of DNS servers and the terminal apparatus.

The "correspondence between different applications and different DNS servers" shown in table 3-1 is still used as an example, and the identifier of the first application is the "FQDN _1". In table 3-1, the application identified by the "FQDN_1" corresponds to the DNS server whose address is the "IP@1" and the DNS server whose address is the "IP@2". In other words, the DNS server whose address is the "IP@1" and the DNS server whose address is the "IP@2" can resolve the DNS request information corresponding to the "first application". In a case in which the preset policy is implemented as the second policy, if a distance between the DNS server whose address is the "IP@1" and the terminal apparatus meets the spacing distance condition, the address of the first DNS server is the "IP@1". If a distance between the DNS server whose address is the "IP@2" and the terminal apparatus meets the spacing distance condition, the address of the first DNS server is the "IP@2".

For example, refer to table 3-2. In addition to the "correspondence between different applications and different DNS servers", table 3-2 further shows "priorities of different DNS servers".

**Table 3-2**

| Identifier of an application | Address of a DNS server | Priority |
|---|---|---|
| FQDN_1 | IP@1 | 3 |
| FQDN_1 | IP@2 | 2 |
| FQDN_2 | IP@1 | 3 |
| FQDN_3 | IP@3 | 4 |
| ... | ... | ... |
| FQDN_n | IP@2 | 2 |

Refer to table 3-2. In table 3-2, for related descriptions of the "correspondence between different applications and different DNS servers", refer to descriptions of table 3-1. Details are not described herein again. In table 3-2, a priority of the DNS server whose address is the "IP@1" is 3, a priority of the DNS server whose address is the "IP@2" is 2, and a priority of the DNS server whose address is the "IP@3" is 4. Herein, in a "priority" column, a larger value indicates a higher priority. Alternatively, a larger value indicates a lower priority. This is not limited in this embodiment of this application.

The "correspondence between different applications and different DNS servers" shown in table 3-2 is still used as an example, and the identifier of the first application is the "FQDN _1". In table 3-2, the application identified by the "FQDN_1" corresponds to the DNS server whose address is the "IP@1" and the DNS server whose address is the "IP@2". In a case in which the preset policy is implemented as the first policy, if the priority of the DNS server whose address is the "IP@1" is higher than the priority of the DNS server whose address is the "IP@2", the address of the first DNS server is the "IP@1".

It should be noted that in this embodiment of this application, only the "priority" and the "distance" are used as examples to describe specific implementations of the preset policy. In an actual application process, another preset policy may be alternatively set based on an actual application requirement. This is not limited in this embodiment of this application.

In this way, when the SMF network element provides the terminal apparatus with "the identifier of the first application and the address of the DNS server corresponding to the identifier of the first application", the terminal apparatus can determine, based on the information provided by the SMF network element, the address of the first DNS server corresponding to the first application.

S303: The terminal apparatus determines a first address of the terminal apparatus based on the address of the first DNS server and an address of the terminal apparatus corresponding to the address of the first DNS server.

Descriptions of the "address of the terminal apparatus" is as follows: There may be one or more addresses of the terminal apparatus. The address of the terminal apparatus may be allocated by the SMF network element or the UPF (PSA) network element. One address of the terminal apparatus corresponds to one PSA network element, and different addresses of the terminal apparatus correspond to different PSA network elements. A PSA network element corresponding to the first address of the terminal apparatus is denoted as a first PSA network element.

Descriptions of the "address of the terminal apparatus corresponding to the address of the first DNS server" is as follows: There is the correspondence between a PSA network element and a DNS server. For details, refer to related descriptions in table 2. In addition, there is also the correspondence between a PSA network element and an address of a terminal apparatus. For details, refer to related descriptions in table 1. Therefore, there is a correspondence between an address of a terminal apparatus and a DNS server that correspond to a same "PSA network element". For example, table 4 shows the "correspondence between a DNS server and an address of a terminal apparatus" by using an "address of a DNS server" as an example.

**Table 4**

| Address of a terminal apparatus | Address of a DNS server |
|---|---|
| Address@0 of the terminal apparatus | IP@0 |
| Address@1 of the terminal apparatus | IP@1 |
| Address@2 of the terminal apparatus | IP@2 |
| ... | ... |
| Address@n of the terminal apparatus | IP@n |

Table 4 shows (n+1) addresses of the terminal apparatus, which are respectively denoted as: the address@0 of the terminal apparatus, the address@1 of the terminal apparatus, ..., and the address@n of the terminal apparatus. There are (n+1) DNS servers, and addresses of the (n+1) DNS servers are respectively denoted as the IP@0, the IP@1, the IP@2, ..., and the IP@n. In table 4, there is a correspondence between an address of a terminal apparatus and a DNS server in a same row. As shown in table 4, the "address@0 of the terminal apparatus" corresponds to a DNS server identified by the address "IP@0", the "address@1 of the terminal apparatus" corresponds to a DNS server identified by the address "IP@1", the "address@2 of the terminal apparatus" corresponds to a DNS server identified by the address "IP@2", ., and the "address@n of the terminal apparatus" corresponds to a DNS server identified by the address "IP@n".

For example, the "correspondence between a DNS server and an address of a terminal apparatus" shown in Table 4 is still used as an example. If the address of the first DNS server is the "IP@1", the first address of the terminal apparatus is the "address@1 of the terminal apparatus". If the address of the first DNS server is the "IP@2", the first address of the terminal apparatus is the "address@2 of the terminal apparatus".

The information of "the address of the first DNS server and the address of the terminal apparatus corresponding to the address of the first DNS server" may be information preconfigured by the terminal apparatus, or may be information delivered by the SMF network element, the PCF network element, or another network element to the terminal apparatus. For example:

The SMF network element sends, to the terminal apparatus, the address of the first DNS server and the address of the terminal apparatus corresponding to the address of the first DNS server. Accordingly, the terminal apparatus receives, from the SMF network element, the address of the first DNS server and the address of the terminal apparatus corresponding to the address of the first DNS server.

For example, in a process in which the SMF network element inserts the BP device into the user plane path of the PDU session, the SMF network element sends, to the terminal apparatus, the address of the first DNS server and the address of the terminal apparatus corresponding to the address of the first DNS server. For example, the foregoing information is carried in a path selection rule (routing rule) delivered to the terminal apparatus.

S304: The terminal apparatus sends the DNS request information to the BP device. Accordingly, the BP device receives the DNS request information from the terminal apparatus.

The DNS request information includes the identifier of the first application, the address of the first DNS server, and the first address of the terminal apparatus. Herein, a source address in the DNS request information is the first address of the terminal apparatus, and a destination address in the DNS request information is the address of the first DNS server.

For example, the identifier of the first application is the "FQDN_1", the address of the first DNS server is the "IP@1", and the address of the terminal apparatus is the "address@1 of the terminal apparatus". In this case, the identifier of the application in the DNS request information is the "FQDN_1", the source address in the DNS request information is the "address@1 of the terminal apparatus", and the destination address in the DNS request information is the "IP@1".

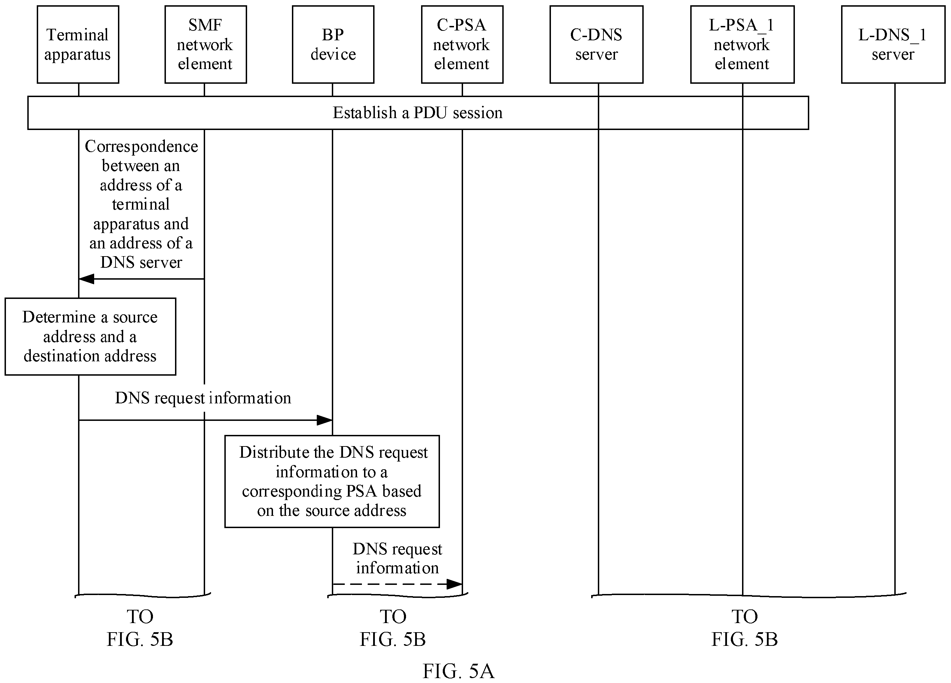

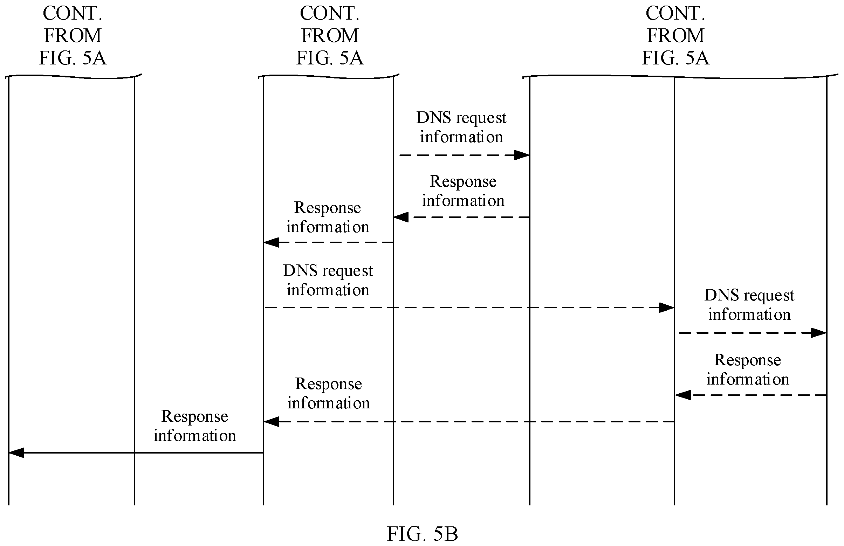

For example, refer to FIG. 5A and FIG. 5B. The terminal apparatus sends DNS request information to the BP device. Accordingly, the BP device receives the DNS request information from the terminal apparatus. Then, the BP device determines, based on a source address in the DNS request information, a PSA network element corresponding to the source address, and then sends the DNS request information to the PSA network element corresponding to the source address. Accordingly, the PSA network element corresponding to the source address receives the DNS request information from the BP device. Herein, if the PSA network element corresponding to the source address is a "C-PSA" network element, the BP device sends the DNS request information to the C-PSA network element. Accordingly, the C-PSA network element receives the DNS request information from the BP device. Then, the C-PSA network element sends the DNS request information to a C-DNS server based on a destination address in the DNS request information. Accordingly, the C-DNS server receives the DNS request information from the C-PSA network element, and resolves the DNS request information to obtain response information in response to the DNS request information. The response information includes an IP address of an application server. The response information is then transmitted from the C-DNS server, the C-PSA network element, and the BP device to the terminal apparatus, to provide the IP address of the application server for the terminal apparatus, so that data transmission can be performed between the terminal apparatus and the application server. If the PSA network element corresponding to the source address is an "L-PSA" network element, the BP device sends the DNS request information to the L-PSA network element. Accordingly, the L-PSA network element receives the DNS request information from the BP device. Then, the L-PSA network element sends the DNS request information to an L-DNS server based on a destination address in the DNS request information. Accordingly, the L-DNS server receives the DNS request information from the L-PSA network element, and resolves the DNS request information to obtain response information in response to the DNS request information. The response information is then transmitted from the L-DNS server, the L-PSA network element, and the BP device to the terminal apparatus, to provide an IP address of an application server for the terminal apparatus.

It should be noted that, when a location of the terminal apparatus changes, the network device (for example, the SMF network element or the PCF network element) provides the terminal apparatus with the "correspondence between different applications and different DNS servers" and the "correspondence between a DNS server and an address of a terminal apparatus".

In the method for sending a domain name system request in this embodiment of this application, after determining the address of the first DNS server corresponding to the first application, the terminal apparatus can further determine the first address of the terminal apparatus based on the address of the first DNS server and the address of the terminal apparatus corresponding to the address of the first DNS server. There is a correspondence between the address of the first DNS server and the first address of the terminal apparatus, and the first address of the terminal apparatus corresponds to one PSA network element. Therefore, the first DNS server can communicate with the PSA network element corresponding to the first address of the terminal apparatus. The DNS request information sent by the terminal apparatus includes the address of the first DNS server and the first address of the terminal apparatus. Therefore, the DNS request information can be transmitted to the first DNS server through the PSA network element corresponding to the terminal apparatus, to improve a DNS resolution success rate, and reduce a "DNS resolution failure" phenomenon caused by a problem that "a DNS server cannot communicate with a PSA network element" in the conventional technology.

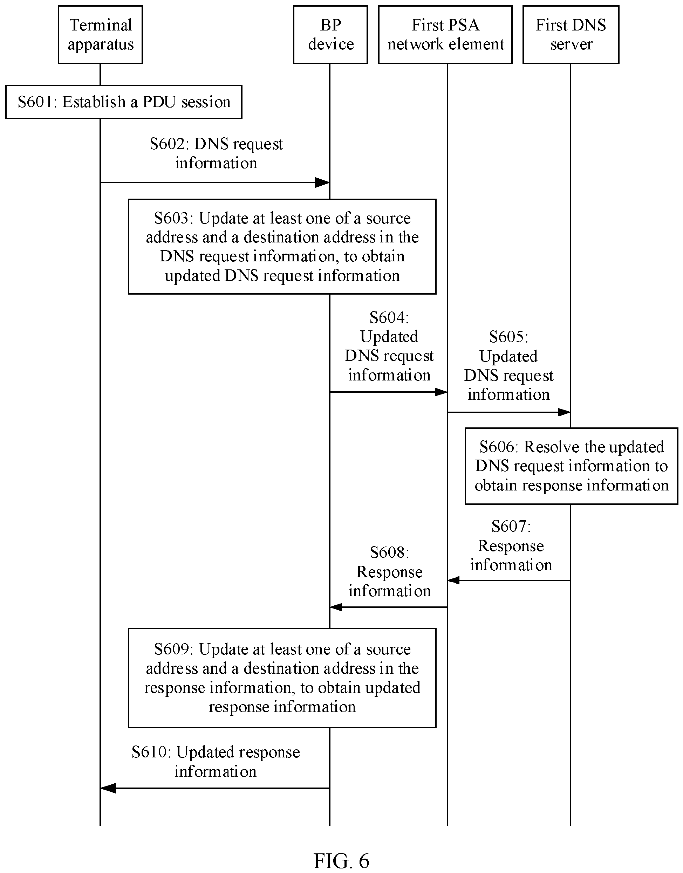

An embodiment of this application provides a second method for sending a domain name system request. The method for sending a domain name system request is applied to a domain name resolution process. Refer to FIG. 6. The method for sending a domain name system request in this embodiment of this application includes the following steps.

S601: A terminal apparatus establishes a PDU session.

For a specific implementation process of S601, refer to related descriptions of S301. Details are not described herein again.

S602: The terminal apparatus sends DNS request information to a BP device. Accordingly, the BP device receives the DNS request information from the terminal apparatus.

The DNS request information includes an identifier of a first application, a source address, and a destination address. In S602, the source address and the destination address selected by the terminal apparatus are not limited. For a specific implementation process, refer to a conventional technology. Details are not described herein again.

S603: The BP device updates at least one of the source address and the destination address in the DNS request information, to obtain updated DNS request information.

A source address in the updated DNS request information is a first address of the terminal apparatus, and a destination address in the updated DNS request information is an address of a first DNS server. Herein, in the updated DNS request information, there is a correspondence between a PSA network element corresponding to the source address and the first DNS server, so that the PSA network element corresponding to the source address can communicate with the first DNS server. For details, refer to related descriptions of S303. Details are not described herein again. This avoids a "DNS resolution failure" phenomenon caused by a problem that a PSA network element cannot communicate with a DNS server.

There are a plurality of manners in which "the BP device updates at least one of the source address and the destination address in the DNS request information, to obtain the updated DNS request information". The following provides descriptions by using three examples.

Example 1: The BP device updates at least one of the source address and the destination address in the DNS request information based on the identifier of the first application in the DNS request information, to obtain the updated DNS request information.

Herein, the source address and the destination address in the update DNS request information are determined based on the identifier of the first application. An application server corresponding to the first application is deployed in a data network corresponding to the first DNS server. Therefore, the first DNS server can resolve the DNS request information. After the first DNS server is determined, a PSA network element corresponding to the first DNS server may be determined, to determine the first address of the terminal apparatus. A PSA network element corresponding to the first address of the terminal apparatus can communicate with the first DNS server, to improve DNS request information resolution efficiency.

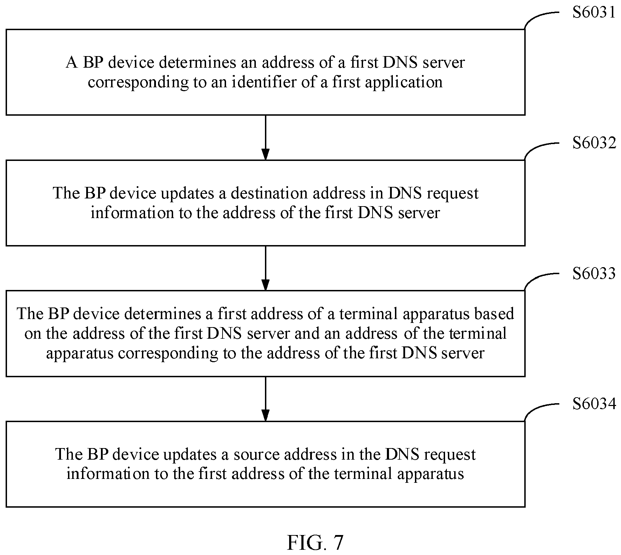

For example, refer to FIG. 7. To obtain the updated DNS request information, the BP device performs the following steps.

S6031: The BP device determines the address of the first DNS server corresponding to the identifier of the first application.

For example, the BP device may determine, based on a "correspondence between different applications and different DNS servers", the address of the first DNS server corresponding to the first application. Herein, for descriptions of the "correspondence between different applications and different DNS servers", refer to related descriptions of S302. Details are not described herein again. S6031 may be specifically implemented as the following step 1 and step 2.

Step 1: An SMF network element sends, to the BP device, the identifier of the first application and an address of a DNS server corresponding to the identifier of the first application. Accordingly, the BP device receives, from the SMF network element, the identifier of the first application and the address of the DNS server corresponding to the identifier of the first application.

For example, "the identifier of the first application and the address of the DNS server corresponding to the identifier of the first application" may be presented in a form of a table, or may be presented in another form. This is not limited in this embodiment of this application. Table 3-1 is used as an example. The first application may be one of the n applications in table 3-1.

Alternatively, step 1 may be implemented as: An SMF network element sends, to the BP device, an identifier of an application deployed in a data network. Accordingly, the BP device receives, from the SMF network element, the identifier of the application deployed in the data network. Alternatively, step 1 may be implemented as: An SMF network element sends, to the BP device, an identifier of an application server deployed in a data network. Accordingly, the BP device receives, from the SMF network element, the identifier of the application server deployed in the data network. As described above, if there is a correspondence between a data network and a DNS server, the BP device can determine, based on the information received from the SMF network element, the identifier of the first application and the address of the DNS server corresponding to the identifier of the first application.

Step 2: The BP device determines the address of the first DNS server based on the identifier of the first application and the address of the DNS server corresponding to the identifier of the first application.

Herein, for descriptions of step 2, refer to related descriptions of S3022. To be specific, the BP device replaces the terminal apparatus in S3022. Specific method procedures are the same, and details are not described herein again.

After the BP device determines the address of the first DNS server, if the destination address in the DNS request information is consistent with the address of the first DNS server, the BP device does not need to perform S6032. If the destination address in the DNS request information is inconsistent with the address of the first DNS server, the BP device performs S6032.

S6032: The BP device updates the destination address in the DNS request information to the address of the first DNS server.

For example, if the address of the first DNS server is the "IP@2", and the destination address in the DNS request information is the "IP@3", the BP device replaces the destination address in the DNS request information with the "IP@2".

S6033: The BP device determines the first address of the terminal apparatus based on the address of the first DNS server and an address of the terminal apparatus corresponding to the address of the first DNS server.

Herein, for descriptions of S6033, refer to related descriptions of S303. To be specific, the BP device replaces the terminal apparatus in S303. Specific method procedures are the same, and details are not described herein again.

After the BP device determines the first address of the terminal apparatus, if the source address in the DNS request information is consistent with the first address of the terminal apparatus, the BP device does not need to perform S6034. If the source address in the DNS request information is inconsistent with the first address of the terminal apparatus, the BP device performs S6034.

S6034: The BP device updates the source address in the DNS request information to the first address of the terminal apparatus.

For example, if the first address of the terminal apparatus is the "address@2 of the terminal apparatus", and the source address in the DNS request information is the "address@3 of the terminal apparatus", the BP device replaces the source address in the DNS request information with the "address@2 of the terminal apparatus".

In this way, the BP device updates the source address and the destination address in the DNS request information based on the identifier of the application in the DNS request information, to obtain the updated DNS request information.

Example 2: The BP device updates the destination address in the DNS request information based on the source address in the DNS request information.

For example, the "correspondence between a DNS server and an address of a terminal apparatus" shown in table 4 is still used as an example. When the source address in the DNS request information is the "address@1 of the terminal apparatus", and the destination address in the DNS request information is not the "IP@1", the BP device updates the destination address in the DNS request information to the "IP@1". When the source address in the DNS request information is the "address@2 of the terminal apparatus", and the destination address in the DNS request information is not the "IP@2", the BP device updates the destination address in the DNS request information to the "IP@2".

Herein, the BP device updates the destination address in the DNS request information based on the source address in the DNS request information, to obtain the updated DNS request information.

In example 2, in a possible implementation, the BP device performs the following step 3 and step 4.

Step 3: If the source address in the DNS request information is the first address of the terminal apparatus, the BP device determines the address of the first DNS server based on the first address of the terminal apparatus and an address of a DNS server corresponding to the first address of the terminal apparatus.

For example, the "correspondence between a DNS server and an address of a terminal apparatus" shown in table 4 is still used as an example. When the source address in the DNS request information is the "address@1 of the terminal apparatus", the BP device determines, with reference to table 4, that the address of the first DNS server is the "IP@1". When the source address in the DNS request information is the "address@2 of the terminal apparatus", the BP device determines that the address of the first DNS server is the "IP@2".

Herein, the information of "the first address of the terminal apparatus and the address of the DNS server corresponding to the first address of the terminal apparatus" may be information preconfigured by the BP device, or may be information delivered by an SMF network element to the BP device, in other words, the SMF network element sends, to the BP device, the first address of the terminal apparatus and the address of the DNS server corresponding to the first address of the terminal apparatus. Accordingly, the BP device receives, from the SMF network element, the first address of the terminal apparatus and the address of the DNS server corresponding to the first address of the terminal apparatus.

Step 4: The BP device updates the destination address in the DNS request information to the address of the first DNS server.

For example, when the source address in the DNS request information is the "address@1 of the terminal apparatus", and the destination address in the DNS request information is not the "IP@1", the BP device updates the destination address in the DNS request information to the "IP@1". When the source address in the DNS request information is the "address@2 of the terminal apparatus", and the destination address in the DNS request information is not the "IP@2", the BP device updates the destination address in the DNS request information to the "IP@2".

In this way, when determining that the source address in the DNS request information is the first address of the terminal apparatus, the BP device updates the destination address in the DNS request information based on the source address in the DNS request information, to obtain the updated DNS request information.

Example 3: The BP device updates the source address in the DNS request information based on the destination address in the DNS request information.

For example, the "correspondence between a DNS server and an address of a terminal apparatus" shown in table 4 is still used as an example. When the destination address in the DNS request information is the "IP@1", and the source address in the DNS request information is not the "address@1 of the terminal apparatus", the BP device updates the source address in the DNS request information to the "address@1 of the terminal apparatus". When the destination address in the DNS request information is the "IP@2", and the source address in the DNS request information is not the "address@2 of the terminal apparatus", the BP device updates the source address in the DNS request information to the "address@2 of the terminal apparatus".

Herein, the BP device updates the source address in the DNS request information based on the destination address in the DNS request information, to obtain the updated DNS request information.

In example 3, in a possible implementation, the BP device performs the following step 5 and step 6.

Step 5: If the destination address in the DNS request information is the address of the first DNS server, the BP device determines the first address of the terminal apparatus based on the address of the first DNS server and an address of the terminal apparatus corresponding to the address of the first DNS server.

For example, the "correspondence between a DNS server and an address of a terminal apparatus" shown in table 4 is still used as an example. When the destination address in the DNS request information is the "IP@1", the BP device determines, with reference to table 4, that the first address of the terminal apparatus is the "address@1 of the terminal apparatus". When the destination address in the DNS request information is the "IP@2", the BP device determines, with reference to table 4, that the first address of the terminal apparatus is the "address@2 of the terminal apparatus".

Herein, the information of "the address of the first DNS server and the address of the terminal apparatus corresponding to the address of the first DNS server" may be information preconfigured by the BP device, or may be information delivered by an SMF network element to the BP device, in other words, the SMF network element sends, to the BP device, the address of the first DNS server and the address of the terminal apparatus corresponding to the address of the first DNS server. Accordingly, the BP device receives, from the SMF network element, the address of the first DNS server of the terminal apparatus and the address of the terminal apparatus corresponding to the address of the first DNS server.

Step 6: The BP device updates the source address in the DNS request information to the first address of the terminal apparatus.

For example, when the destination address in the DNS request information is the "IP@1", and the source address in the DNS request information is not the "address@1 of the terminal apparatus", the BP device updates the source address in the DNS request information to the "address@1 of the terminal apparatus". When the destination address in the DNS request information is the "IP@2", and the source address in the DNS request information is not the "address@2 of the terminal apparatus", the BP device updates the source address in the DNS request information to the "address@2 of the terminal apparatus".

In this way, when determining that the destination address in the DNS request information is the address of the first DNS server, the BP device updates the source address in the DNS request information based on the destination address in the DNS request information, to obtain the updated DNS request information.

It should be noted that, in the foregoing example 1, an update rule of the BP device is "updating at least one of the source address and the destination address in the DNS request information based on the identifier of the first application in the DNS request information". In the foregoing example 2, an update rule of the BP device is "updating the destination address in the DNS request information based on the source address in the DNS request information". In the foregoing example 3, an update rule of the BP device is "updating the source address in the DNS request information based on the destination address in the DNS request information". The update rule in any one of the foregoing three examples may be preconfigured on the BP device, or may be configured by the SMF network element for the BP device. The update rule in any one of the foregoing three examples may be configured at a granularity of the terminal apparatus. In other words, update rules for different DNS request information sent by a same terminal apparatus are the same, and update rules for DNS request information sent by different terminal apparatuses may be the same or different. In this case, if all N terminal apparatuses are served by the BP device, the BP device needs to configure N update rules. Alternatively, the update rule in any one of the foregoing three examples may be configured at a granularity of the "BP device". In other words, for one BP device, the BP device updates the source address and/or the destination address in the DNS request information according to a same update rule. In this case, if all N terminal apparatuses are served by the BP device, the BP device needs to configure one update rule.

S604: The BP device sends the updated DNS request information to a first PSA network element based on the source address in the updated DNS request information. Accordingly, the first PSA network element receives the updated DNS request information from the BP device.

The first PSA network element is the PSA network element corresponding to the first address of the terminal apparatus.

For example, the BP device determines the first PSA network element based on the source address in the updated DNS request information. Then, the BP device sends the updated DNS request information to the first PSA network element. For a specific implementation process, refer to the conventional technology. Details are not described herein again.

S605: The first PSA network element sends the updated DNS request information to the first DNS server based on the destination address in the updated DNS request information. Accordingly, the first DNS server receives the updated DNS request information from the first PSA network element.

There is a correspondence between the first DNS server and the first PSA network element.

S606: The first DNS server resolves the updated DNS request information to obtain response information.

The DNS request information includes the identifier of the first application. Correspondingly, the response information includes an IP address of the application server corresponding to the first application. A source address in the response information is the destination address in the updated DNS request information, and a destination address in the response information is the source address in the updated DNS request information. For a specific implementation process of S606, refer to the conventional technology. Details are not described herein again.

S607: The first DNS server sends the response information to the first PSA network element. Accordingly, the first PSA network element receives the response information from the first DNS server.

For example, the destination address in the response information is the source address in the updated DNS request information, namely, the first address of the terminal apparatus. The first DNS server sends the response information to the first PSA network element based on the destination address in the response information. For a specific implementation process, refer to the conventional technology. Details are not described herein again.

S608: The first PSA network element sends the response information to the BP device. Accordingly, the BP device receives the response information from the first PSA network element.

Herein, the source address in the response information is the destination address in the updated DNS request information, and the destination address in the response information is the source address in the updated DNS request information.

S609: The BP device updates at least one of the source address and the destination address in the response information, to obtain updated response information.

A source address in the updated response information is the destination address in the to-be-updated DNS request information, and a destination address in the updated response information is the source address in the to-be-updated DNS request information.

For example, if the BP device replaces the source address in the DNS request information from the "address@3 of the terminal apparatus" to the "address@2 of the terminal apparatus" in S603, the BP device replaces the destination address in the response information from the "address@2 of the terminal apparatus" to the "address@3 of the terminal apparatus" in S609. If the BP device replaces the destination address in the DNS request information from the "IP@1" to the "IP@2" in S603, the BP device replaces the source address in the response information from the "IP@2" to the "IP@1" in S609.

S610: The BP device sends the updated response information to the terminal apparatus. Accordingly, the terminal apparatus receives the updated response information from the BP device.

Herein, the updated response information includes the IP address of the application server corresponding to the first application, the destination address in the to-be-updated DNS request information, and the source address in the to-be-updated DNS request information. After performing S602 of sending the DNS request information, the terminal apparatus monitors the response message that carries the source address and the destination address in the to-be-updated DNS request information. Therefore, the BP device can replace at least one of the source address and the destination address in the response information, to ensure that the terminal apparatus can obtain, through the monitoring, the response message that carries the source address and the destination address in the to-be-updated DNS request information.

In the method for sending a domain name system request in this embodiment of this application, after receiving the DNS request information from the terminal apparatus, the BP device can update at least one of the source address and the destination address in the DNS request information, to obtain the updated DNS request information, and then send the updated DNS request information. The source address in the updated DNS request information is the first address of the terminal apparatus, and the destination address in the updated DNS request information is the address of the first DNS server. Therefore, the first PSA network element corresponding to the first address of the terminal apparatus can communicate with the first DNS server, so that the updated DNS request information can be transmitted to the first DNS server through the first PSA network element, to improve a DNS resolution success rate, and reduce the "DNS resolution failure" phenomenon caused by the problem that "the DNS server cannot communicate with the PSA network element" in the conventional technology.

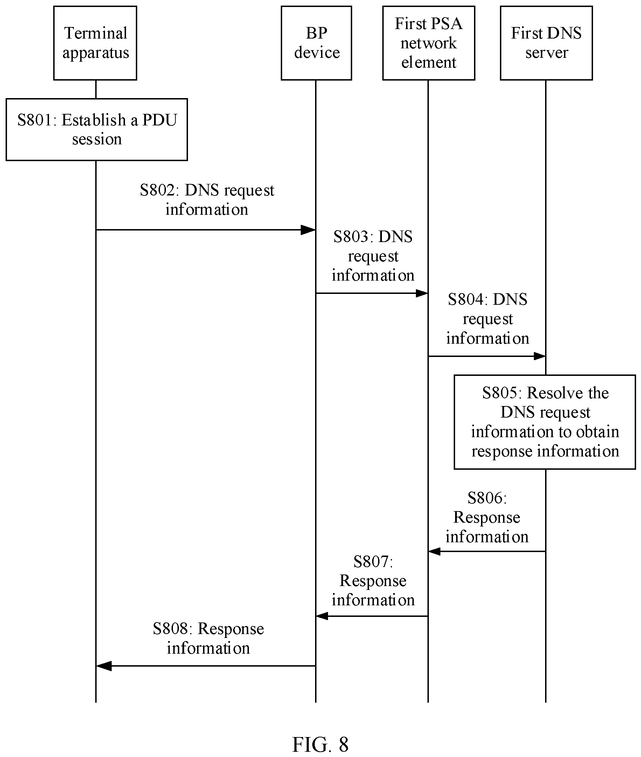

An embodiment of this application provides a third method for sending a domain name system request. The method for sending a domain name system request is applied to a domain name resolution process. Refer to FIG. 8. The method for sending a domain name system request in this embodiment of this application includes the following steps.

S801: A terminal apparatus establishes a PDU session.

For a specific implementation process of S801, refer to related descriptions of S301. Details are not described herein again. As shown in table 1, a plurality of addresses are allocated to the terminal apparatus. One of the plurality of addresses corresponds to one PSA network element, and different addresses in the plurality of addresses correspond to different PSA network elements.

It should be noted that in a process of inserting a BP device and an L-PSA network element into a user plane path of the PDU session, an SMF network element separately delivers forwarding rule information to a C-PSA network element and the L-PSA network element, to indicate the C-PSA network element and the L-PSA network element to send, to the BP device, a data packet with a specific destination address when receiving the data packet. Specifically, the forwarding rule information delivered to the C-PSA network element indicates the C-PSA network element to send, to the BP device, a data packet whose destination address is the "address@1 of the terminal apparatus", a data packet whose destination address is the "address@2 of the terminal apparatus", ., and a data packet whose destination address is the "address@n of the terminal apparatus" when receiving these data packets. If N addresses are allocated to the terminal apparatus, correspondingly, (N-1) destination addresses in the forwarding rule information are delivered to the C-PSA network element. Certainly, the plurality of destination addresses may be combined in one piece of forwarding rule information, or may be carried in different pieces of forwarding rule information, and are transmitted to the C-PSA network element. This is not limited in this embodiment of this application. Similarly, an L-PSA_1 network element is used as an example to describe a case in which the forwarding rule information is sent to one network element in L-PSA network elements. The forwarding rule information delivered to the L-PSA_1 network element indicates the L-PSA_1 network element to send, to the BP device, the data packet whose destination address is the "address@1 of the terminal apparatus", the data packet whose destination address is the "address@2 of the terminal apparatus", ., and the data packet whose destination address is the "address@n of the terminal apparatus" when receiving these data packets. If the N addresses are allocated to the terminal apparatus, correspondingly, the (N-1) destination addresses in the forwarding rule information are delivered to the L-PSA_1 network element. Certainly, the plurality of destination addresses may be combined in one piece of forwarding rule information, or may be carried in different pieces of forwarding rule information, and are transmitted to the L-PSA_1 network element. This is not limited in this embodiment of this application. For a case in which the forwarding rule information is sent to another network element in the L-PSA network elements, refer to the foregoing descriptions. Details are not described herein again.

S802: The terminal apparatus sends DNS request information to the BP device. Accordingly, the BP device receives the DNS request information from the terminal apparatus.

The DNS request information includes an identifier of a first application, a source address, and a destination address. The source address in the DNS request information is a second address of the terminal apparatus, and corresponds to a second PSA network element. The destination address in the DNS request information is an address of a first DNS server, and corresponds to a first PSA network element.

For example, the "correspondence between an address of a terminal apparatus and a PSA network element" shown in table 1 and the "correspondence between a PSA network element and a DNS server" shown in table 2 are used as an example. If the source address in the DNS request information is the "address@0 of the terminal apparatus", and the destination address in the DNS request information is the "IP@1", the first DNS server is an "L-DNS_1" server, and the second PSA network element is a "C-PSA" network element. If the source address in the DNS request information is the "address@1 of the terminal apparatus", and the destination address in the DNS request information is the "IP@0", the first DNS server is a "C-DNS" server, and the second PSA network element is an "L-PSA_1" network element.

S803: The BP device sends, based on the destination address in the DNS request information, the DNS request information to the first PSA network element corresponding to the destination address. Accordingly, the first PSA network element receives the DNS request information from the BP device.

For example, the "correspondence between a PSA network element and a DNS server" shown in table 2 is used as an example. If the destination address in the DNS request information is the "IP@0", the first PSA network element is a "C-PSA" network element. The BP device sends the DNS request information to the "C-PSA" network element. If the destination address in the DNS request information is the "IP@1", the first PSA network element is an "L-PSA_1" network element. The BP device sends the DNS request information to the "L-PSA_1" network element.

S804: The first PSA network element sends the DNS request information to the first DNS server. Accordingly, the first DNS server receives the DNS request information from the first PSA network element.

For example, the first PSA network element sends the DNS request information to the first DNS server based on the destination address in the DNS request information. If the first PSA network element is a "C-PSA" network element, the first DNS server is a "C-DNS" server. The "C-PSA" network element sends the DNS request information to the "C-DNS" server. If the first PSA network element is an "L-PSA_1" network element, the first server is an "L-DNS" server. The "L-PSA" network element sends the DNS request information to the "L-DNS" server. For a specific implementation process of S804, refer to a conventional technology. Details are not described herein again.

S805: The first DNS server resolves the DNS request information to obtain response information.

The DNS request information includes the identifier of the first application. Correspondingly, the response information includes an IP address of an application server corresponding to the first application. A source address in the response information is the destination address in the DNS request information, and a destination address in the response information is the source address in the DNS request information. For a specific implementation process of S805, refer to the conventional technology. Details are not described herein again.

S806: The first DNS server sends the response information to the first PSA network element. Accordingly, the first PSA network element receives the response information from the first DNS server.

The source address in the response information is the address of the first DNS server, and the destination address in the response information is the second address of the terminal apparatus. The second address of the terminal apparatus corresponds to the second PSA network element. Herein, S806 may be specifically implemented as the following process:

The first PSA network element receives, from the first DNS server through a tunnel between the first PSA network element and the first DNS server, the response information in response to the DNS request information.

The tunnel is established between the first PSA network element and the first DNS server. When the destination address in the response information is the second address of the terminal apparatus, and the source address in the response information is the address of the first DNS server, because the second address of the terminal apparatus corresponds to the second PSA network element, the response information may be transmitted through the tunnel between the first PSA network element and the first DNS server.

For example, the destination address in the response information is the "address@0 of the terminal apparatus", and the source address in the response information is the "IP@1". In this case, the first DNS server is an "L-DNS_1" server, and the first PSA network element is an "L-PSA_1" network element. The response information can be transmitted from the first DNS server to the first PSA network element through the tunnel. Therefore, in addition to the source address and the destination address, the response information further needs to encapsulate an address of the tunnel between the first PSA network element and the first DNS server, to block the destination address in the response information, so that the response information can be transmitted from the first DNS server to the first PSA network element.

S807: The first PSA network element sends the response information to the BP device based on the forwarding rule information. Accordingly, the BP device receives the response information from the first PSA network element.

For related descriptions of the forwarding rule information, refer to descriptions of S801. Details are not described herein again. The first PSA network element sends the response information to the BP device based on the forwarding rule information. Herein, the forwarding rule information indicates the first PSA network element to send a data packet whose destination address is the second address to the BP device. The data packet includes the response information.

The forwarding rule information may be preconfigured information, or may be information configured by the SMF network element for the first PSA, in other words, the SMF network element sends the forwarding rule information to the first PSA network element. Accordingly, the first PSA network element receives the forwarding rule information from the SMF network element.

S808: The BP device sends the response information to the terminal apparatus. Accordingly, the terminal apparatus receives the response information from the BP device.

Herein, the response information includes the IP address of the application server corresponding to the first application, the destination address in the DNS request information, and the source address in the DNS request information.

In the method for sending a domain name system request in this embodiment of this application, after receiving the DNS request information from the terminal apparatus, the BP device sends, based on the destination address in the DNS request information, the DNS request information to the first PSA network element corresponding to the destination address. The destination address in the DNS request information corresponds to the first PSA network element, and the destination address in the DNS request information is the address of the first DNS server. Therefore, the first DNS server can communicate with the first PSA network element, to reduce a "DNS resolution failure" phenomenon caused by a problem that "a DNS server cannot communicate with a PSA network element" in the conventional technology, and improve a DNS resolution success rate. In a process in which the first DNS server feeds back the response information, after the first PSA network element receives the response information from the first DNS server, even if the destination address in the response information is the second address of the terminal apparatus and corresponds to the second PSA network element, the first PSA network element can still send the response information to the BP device based on the forwarding rule information, so that the response information can be provided to the terminal apparatus through the BP device.

The foregoing mainly describes the solutions provided in embodiments of this application from the perspective of interaction between network elements. Correspondingly, an embodiment of this application further provides an apparatus for sending a domain name system request. The apparatus for sending a domain name system request may be the network element in the foregoing method embodiments, an apparatus including the network element, or a component that may be used in the network element. It can be understood that, to implement the foregoing functions, the apparatus for sending a domain name system request includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

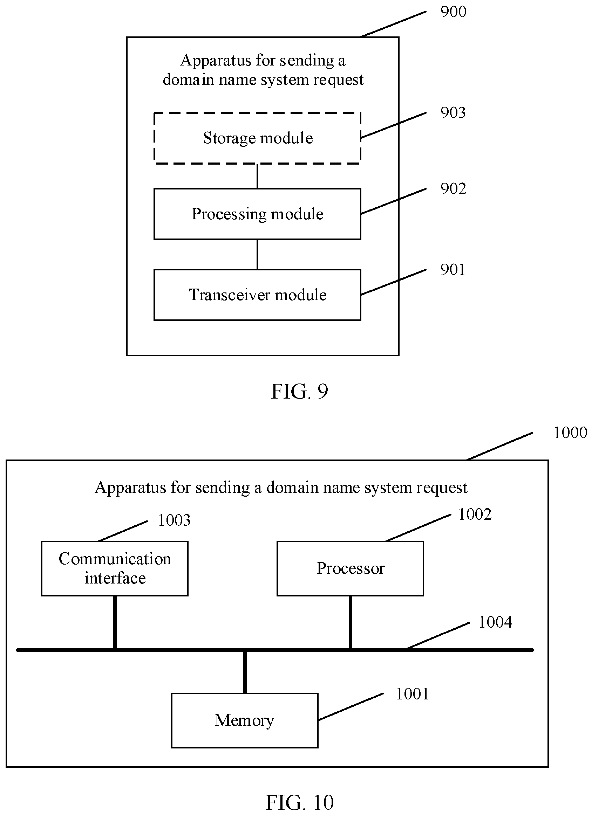

FIG. 9 is a schematic diagram of a structure of an apparatus 900 for sending a domain name system request. The apparatus 900 for sending a domain name system request includes a transceiver module 901 and a processing module 902.

An example in which the apparatus 900 for sending a domain name system request is the terminal apparatus in FIG. 3 in the foregoing method embodiment is used.

The processing module 902 is configured to determine an address of a first domain name system DNS server corresponding to a first application. The processing module 902 is further configured to determine a first address of the terminal apparatus based on the address of the first DNS server and an address of the terminal apparatus corresponding to the address of the first DNS server. The transceiver module 901 is configured to send DNS request information. The DNS request information includes an identifier of the first application, the address of the first DNS server, and the first address of the terminal apparatus.

In a possible design, the transceiver module 901 is further configured to receive, from a session management function SMF network element, the address of the first DNS server and the address of the terminal apparatus corresponding to the address of the first DNS server.

In a possible design, the transceiver module 901 is configured to receive, from the SMF network element, the identifier of the first application and an address of a DNS server corresponding to the identifier of the first application. The processing module 902 is configured to determine the address of the first DNS server based on the identifier of the first application and the address of the DNS server corresponding to the identifier of the first application.

In a possible design, the identifier of the first application corresponds to a plurality of DNS servers. The processing module 902 is specifically configured to determine, from the plurality of DNS servers, the first DNS server that meets a preset policy. The preset policy includes at least one of the following: a priority of the first DNS server meets a priority condition in priorities of the plurality of DNS servers; and a distance between the first DNS server and the terminal apparatus meets a spacing distance condition.

An example in which the apparatus 900 for sending a domain name system request is the BP device in FIG. 6 in the foregoing method embodiment is used.

The transceiver module 901 is configured to receive domain name system DNS request information from a terminal apparatus. The processing module 902 is configured to update at least one of a source address and a destination address in the DNS request information, to obtain updated DNS request information. A source address in the updated DNS request information is a first address of the terminal apparatus, and a destination address in the updated DNS request information is an address of a first DNS server. The transceiver module 901 is further configured to send the updated DNS request information to a first packet data unit session anchor PSA network element based on the source address in the updated DNS request information. The first PSA network element corresponds to the first address of the terminal apparatus, and the destination address in the updated DNS request information enables the first PSA network element to send the updated DNS request information to the first DNS server.

In a possible design, the processing module 902 is specifically configured to: update at least one of the source address and the destination address in the DNS request information based on an identifier of a first application in the DNS request information, update the destination address in the DNS request information based on the source address in the DNS request information, or update the source address in the DNS request information based on the destination address in the DNS request information.

In a possible design, the processing module 902 is specifically configured to: determine the address of the first DNS server corresponding to the identifier of the first application; update the destination address in the DNS request information to the address of the first DNS server; determine the first address of the terminal apparatus based on the address of the first DNS server and an address of the terminal apparatus corresponding to the address of the first DNS server; and update the source address in the DNS request information to the first address of the terminal apparatus.

In a possible design, the transceiver module 901 is configured to receive, from a session management function SMF network element, the identifier of the first application and an address of a DNS server corresponding to the identifier of the first application. The processing module 902 is configured to determine the address of the first DNS server based on the identifier of the first application and the address of the DNS server corresponding to the identifier of the first application.

In a possible design, the processing module 902 is specifically configured to: if the destination address in the DNS request information is the address of the first DNS server, determine the first address of the terminal apparatus based on the address of the first DNS server and an address of the terminal apparatus corresponding to the address of the first DNS server, and update the source address in the DNS request information to the first address of the terminal apparatus.

In a possible design, the transceiver module 901 is further configured to receive, from an SMF network element, the address of the first DNS server and the address of the terminal apparatus corresponding to the address of the first DNS server.

In a possible design, the processing module 902 is specifically configured to: if the source address in the DNS request information is the first address of the terminal apparatus, determine the address of the first DNS server based on the first address of the terminal apparatus and an address of a DNS server corresponding to the first address of the terminal apparatus, and update the destination address in the DNS request information to the address of the first DNS server.

In a possible design, the transceiver module 901 is further configured to receive, from an SMF network element, the first address of the terminal apparatus and the address of the DNS server corresponding to the first address of the terminal apparatus.

In a possible design, the transceiver module 901 is further configured to receive, from the first PSA network element, response information in response to the DNS request information. The processing module 902 is configured to update at least one of a source address and a destination address in the response information, to obtain updated response information. A source address in the updated response information is the destination address in the to-be-updated DNS request information, and a destination address in the updated response information is the source address in the to-be-updated DNS request information. The transceiver module 901 is further configured to send the updated response information to the terminal apparatus.

An example in which the apparatus 900 for sending a domain name system request is the BP device in FIG. 8 in the foregoing method embodiment is used.

The transceiver module 901 is configured to receive domain name system DNS request information from a terminal apparatus. The transceiver module 901 is further configured to send, based on a destination address in the DNS request information, the DNS request information to a first packet data unit session anchor PSA network element corresponding to the destination address, so that the DNS request information can be sent by the first PSA network element to a first DNS server.

An example in which the apparatus 900 for sending a domain name system request is the first PSA network element in FIG. 8 in the foregoing method embodiment is used.

The transceiver module 901 is configured to send DNS request information to a first domain name system DNS server. The DNS request information includes an address of the first DNS server and a second address of a terminal apparatus corresponding to a second PSA network element. The transceiver module 901 is further configured to receive, from the first DNS server, response information in response to the DNS request information. The processing module 902 is configured to enable the transceiver module 901 to send the response information to a branch point BP device based on forwarding rule information. The forwarding rule information indicates the first PSA network element to send a data packet whose destination address is the second address to the BP device, and the data packet includes the response information.

In a possible design, the transceiver module 901 is configured to receive the forwarding rule information from a session management function SMF network element.

In a possible design, the transceiver module 901 is configured to receive, from the first DNS server through a tunnel between the first PSA network element and the first DNS server, the response information in response to the DNS request information.

All related content of the steps in the foregoing method embodiments may be cited in function descriptions of the corresponding functional modules. Details are not described herein again.

It should be understood that, in this embodiment of this application, the processing module 902 may be implemented by a processor or a processor-related circuit component, and the transceiver module 901 may be implemented by a transceiver or a transceiver-related circuit component.

Optionally, the apparatus 900 for sending a domain name system request may further include a storage module 903, configured to store program code and data of the apparatus 900. The data may include but is not limited to original data, intermediate data, or the like.

In a possible manner, the processing module 902 may be a processor or a controller, for example, may be a central processing unit (central processing unit, CPU), a general-purpose processor, digital signal processing (digital signal processing, DSP), an application-specific integrated circuit (application-specific integrated circuit, ASIC), a field-programmable gate array (field-programmable gate array, FPGA) or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The transceiver module 901 may be a transceiver, a transceiver circuit, a communication interface, or the like. The storage module 903 may be a memory.

In a possible manner, when the processing module 902 is the processor, the transceiver module 901 is the communication interface, and the storage module 903 is the memory, the structure of the apparatus for sending a domain name system request in this embodiment of this application may be shown in FIG. 10.

FIG. 10 is a simplified schematic diagram of a possible design structure of an apparatus for sending a domain name system request according to an embodiment of this application. The apparatus 1000 for sending a domain name system request includes a processor 1002, a communication interface 1003, and a memory 1001. Optionally, the apparatus 1000 for sending a domain name system request may further include a bus 1004. The communication interface 1003, the processor 1002, and the memory 1001 may be connected to each other through the bus 1004. The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, only one line is used to represent the bus in FIG. 10, but this does not mean that there is only one bus or only one type of bus.

A person of ordinary skill in the art may understand that all or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the described apparatus embodiment is merely an example. For example, division into the modules is merely logical function division. There may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The modules described as separate parts may or may not be physically separate, and parts displayed as modules may or may not be physical modules, in other words, may be located in one location, or may be distributed on a plurality of network devices (for example, terminal apparatuses). Some or all of the modules may be selected based on actual requirements to achieve the objectives of the solutions of embodiments.

In addition, functional modules in embodiments of this application may be integrated into one processing module, or each of the functional modules may exist alone, or two or more modules may be integrated into one module. The integrated module may be implemented in a form of hardware, or may be implemented in a form of hardware in addition to a software functional module.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for sending a domain name system DNS request, comprising:
determining, by a terminal apparatus, an address of a first DNS server corresponding to a first application;
determining, by the terminal apparatus, a first address of the terminal apparatus based on the address of the first DNS server and an address of the terminal apparatus corresponding to the address of the first DNS server; and
sending, by the terminal apparatus, DNS request information, wherein the DNS request information comprises an identifier of the first application, the address of the first DNS server, and the first address of the terminal apparatus.

2. The method according to claim 1, wherein the method further comprises:
receiving, by the terminal apparatus from a session management function SMF network element, the address of the first DNS server and the address of the terminal apparatus corresponding to the address of the first DNS server.

3. The method according to claim 1 or 2, wherein the determining, by a terminal apparatus, an address of a first DNS server corresponding to a first application comprises:
receiving, by the terminal apparatus from the SMF network element, the identifier of the first application and an address of a DNS server corresponding to the identifier of the first application; and
determining, by the terminal apparatus, the address of the first DNS server based on the identifier of the first application and the address of the DNS server corresponding to the identifier of the first application.

4. The method according to claim 3, wherein the identifier of the first application corresponds to a plurality of DNS servers; and the determining, by the terminal apparatus, the address of the first DNS server based on the identifier of the first application and the address of the DNS server corresponding to the identifier of the first application comprises:
determining, by the terminal apparatus from the plurality of DNS servers, the first DNS server that meets a preset policy, wherein
the preset policy comprises at least one of the following:
a priority of the first DNS server meets a priority condition in priorities of the plurality of DNS servers; and
a distance between the first DNS server and the terminal apparatus meets a spacing distance condition.

5. A method for sending a domain name system DNS request, comprising:
receiving, by a branch point BP device, domain name system DNS request information from a terminal apparatus;
updating, by the BP device, at least one of a source address and a destination address in the DNS request information, to obtain updated DNS request information, wherein a source address in the updated DNS request information is a first address of the terminal apparatus, and a destination address in the updated DNS request information is an address of a first DNS server; and
sending, by the BP device, the updated DNS request information to a first packet data unit session anchor PSA network element based on the source address in the updated DNS request information, the first PSA network element corresponding to the first address of the terminal apparatus, the destination address in the updated DNS request information enabling the first PSA network element to send the updated DNS request information to the first DNS server.

6. The method according to claim 5, wherein the updating, by the BP device, at least one of a source address and a destination address in the DNS request information comprises:
updating, by the BP device, at least one of the source address and the destination address in the DNS request information based on an identifier of a first application in the DNS request information;
updating, by the BP device, the destination address in the DNS request information based on the source address in the DNS request information; or
updating, by the BP device, the source address in the DNS request information based on the destination address in the DNS request information.

7. The method according to claim 6, wherein the updating, by the BP device, at least one of the source address and the destination address in the DNS request information based on an identifier of a first application in the DNS request information comprises:
determining, by the BP device, the address of the first DNS server corresponding to the identifier of the first application;
updating, by the BP device, the destination address in the DNS request information to the address of the first DNS server;
determining, by the BP device, the first address of the terminal apparatus based on the address of the first DNS server and an address of the terminal apparatus corresponding to the address of the first DNS server; and
updating, by the BP device, the source address in the DNS request information to the first address of the terminal apparatus.

8. The method according to claim 7, wherein the determining, by the BP device, the address of the first DNS server corresponding to the identifier of the first application comprises:
receiving, by the BP device from a session management function SMF network element, the identifier of the first application and an address of a DNS server corresponding to the identifier of the first application; and
determining, by the BP device, the address of the first DNS server based on the identifier of the first application and the address of the DNS server corresponding to the identifier of the first application.

9. The method according to claim 6, wherein the updating, by the BP device, the source address in the DNS request information based on the destination address in the DNS request information comprises:
if the destination address in the DNS request information is the address of the first DNS server, determining, by the BP device, the first address of the terminal apparatus based on the address of the first DNS server and an address of the terminal apparatus corresponding to the address of the first DNS server; and
updating, by the BP device, the source address in the DNS request information to the first address of the terminal apparatus.

10. The method according to any one of claims 7 to 9, wherein the method further comprises:
receiving, by the BP device from the SMF network element, the address of the first DNS server and the address of the terminal apparatus corresponding to the address of the first DNS server.

11. The method according to claim 6, wherein the updating, by the BP device, the destination address in the DNS request information based on the source address in the DNS request information comprises:
if the source address in the DNS request information is the first address of the terminal apparatus, determining, by the BP device, the address of the first DNS server based on the first address of the terminal apparatus and an address of a DNS server corresponding to the first address of the terminal apparatus; and
updating, by the BP device, the destination address in the DNS request information to the address of the first DNS server.

12. The method according to claim 11, wherein the method further comprises:
receiving, by the BP device from an SMF network element, the first address of the terminal apparatus and the address of the DNS server corresponding to the first address of the terminal apparatus.

13. The method according to any one of claims 5 to 12, wherein the method further comprises:
receiving, by the BP device from the first PSA network element, response information in response to the DNS request information;
updating, by the BP device, at least one of a source address and a destination address in the response information, to obtain updated response information, wherein a source address in the updated response information is the destination address in the to-be-updated DNS request information, and a destination address in the updated response information is the source address in the to-be-updated DNS request information; and
sending, by the BP device, the updated response information to the terminal apparatus.

14. The method according to claim 13, wherein
the DNS request information comprises the identifier of the first application; and
the response information comprises an internet protocol IP address of an application server corresponding to the first application.

15. A method for sending a domain name system DNS request, comprising:
receiving, by a branch point BP device, domain name system DNS request information from a terminal apparatus; and
sending, by the BP device based on a destination address in the DNS request information, the DNS request information to a first packet data unit session anchor PSA network element corresponding to the destination address, the destination address in the DNS request information enabling the first PSA network element to send the DNS request information to a first DNS server.

16. A method for sending domain name system DNS request information, comprising:
sending, by a first packet data unit session anchor PSA network element, DNS request information to a first domain name system DNS server, wherein the DNS request information comprises an address of the first DNS server and a second address of a terminal apparatus corresponding to a second PSA network element;
receiving, by the first PSA network element from the first DNS server, response information in response to the DNS request information; and
sending, by the first PSA network element, the response information to a branch point BP device based on forwarding rule information, wherein the forwarding rule information indicates the first PSA network element to send a data packet whose destination address is the second address to the BP device, and the data packet comprises the response information.

17. The method according to claim 16, wherein the method further comprises:
receiving, by the first PSA network element, the forwarding rule information from a session management function SMF network element.

18. The method according to claim 16 or 17, wherein the receiving, by the first PSA network element from the first DNS server, response information in response to the DNS request information comprises:
receiving, by the first PSA network element from the first DNS server through a tunnel between the first PSA network element and the first DNS server, the response information in response to the DNS request information.

19. The method according to any one of claims 16 to 18, wherein
the DNS request information comprises an identifier of a first application; and
the response information comprises an internet protocol IP address of an application server corresponding to the first application.

20. An apparatus for sending a domain name system DNS request, comprising a unit configured to perform the steps according to any one of claims 1 to 4.

21. An apparatus for sending a domain name system DNS request, comprising a processor, configured to invoke a program in a memory, to enable the apparatus for sending a domain name system DNS request to perform the method for sending a domain name system DNS request according to any one of claims 1 to 4.

22. An apparatus for sending a domain name system DNS request, comprising a processor and an interface circuit, wherein the interface circuit is configured to communicate with another apparatus, and the processor is configured to perform the method for sending a domain name system DNS request according to any one of claims 1 to 4.

23. An apparatus for sending a domain name system DNS request, comprising a unit configured to perform the steps according to any one of claims 5 to 14.

24. An apparatus for sending a domain name system DNS request, comprising a processor, configured to invoke a program in a memory, to enable the apparatus for sending a domain name system DNS request to perform the method for sending a domain name system DNS request according to any one of claims 5 to 14.

25. An apparatus for sending a domain name system DNS request, comprising a processor and an interface circuit, wherein the interface circuit is configured to communicate with another apparatus, and the processor is configured to perform the method for sending a domain name system DNS request according to any one of claims 5 to 14.

26. An apparatus for sending a domain name system DNS request, comprising a unit configured to perform the steps according to claim 15.

27. An apparatus for sending a domain name system DNS request, comprising a processor, configured to invoke a program in a memory, to enable the apparatus for sending a domain name system DNS request to perform the method for sending a domain name system DNS request according to claim 15.

28. An apparatus for sending a domain name system DNS request, comprising a processor and an interface circuit, wherein the interface circuit is configured to communicate with another apparatus, and the processor is configured to perform the method for sending a domain name system DNS request according to claim 15.

29. An apparatus for sending a domain name system DNS request, comprising a unit configured to perform the steps according to any one of claims 16 to 19.

30. An apparatus for sending a domain name system DNS request, comprising a processor, configured to invoke a program in a memory, to enable the apparatus for sending a domain name system DNS request to perform the method for sending a domain name system DNS request according to any one of claims 16 to 19.

31. An apparatus for sending a domain name system DNS request, comprising a processor and an interface circuit, wherein the interface circuit is configured to communicate with another apparatus, and the processor is configured to perform the method for sending a domain name system DNS request according to any one of claims 16 to 19.

32. A computer-readable storage medium, wherein the computer-readable storage medium stores a program; and when the program is invoked by a processor, the method for sending a domain name system DNS request according to any one of claims 1 to 4 is executed, the method for sending a domain name system DNS request according to any one of claims 5 to 14 is executed, the method for sending a domain name system DNS request according to claim 15 is executed, or the method for sending a domain name system DNS request according to any one of claims 16 to 19 is executed.

33. A computer program, wherein when the program is invoked by a processor, the method for sending a domain name system DNS request according to any one of claims 1 to 4 is executed, the method for sending a domain name system DNS request according to any one of claims 5 to 14 is executed, the method for sending a domain name system DNS request according to claim 15 is executed, or the method for sending a domain name system DNS request according to any one of claims 16 to 19 is executed.
